# EUROPÄISCHE PATENTSCHRIFT

(11) **EP 4 390 337 B1**
(45) Veröffentlichungstag und Bekanntmachung des Hinweises auf die Patenterteilung: **03.06.2026**
(21) Anmeldenummer: 23216187.7
(22) Anmeldetag: 13.12.2023
(51) Int. Cl.: G01F 25/00, G01F 13/00

(54) **VERFAHREN ZUM KALIBRIEREN EINES FÖRDERGERÄTS, VERFAHREN ZUM DOSIEREN UND DOSIERVORRICHTUNG**
METHOD FOR CALIBRATING A CONVEYOR DEVICE, METHOD FOR DOSING AND DOSING DEVICE
PROCÉDÉ D'ÉTALONNAGE D'UN APPAREIL DE TRANSPORT, PROCÉDÉ DE DOSAGE ET DISPOSITIF DE DOSAGE

(30) Priorität: 20.12.2022 AT 509742022
(43) Veröffentlichungstag der Anmeldung: 26.06.2024
(73) Patentinhaber: Hagleitner, Hans Georg, 5700 Zell am See (AT)
(72) Erfinder: Hagleitner, Hans Georg, 5700 Zell am See (AT)
(74) Vertreter: Torggler & Hofmann Patentanwälte - Innsbruck

(56) Entgegenhaltungen:
- EP-B1- 0 753 721
- EP-B1- 3 701 254
- CN-A- 104 427 929
- US-B2- 7 916 299

## Beschreibung

Die Erfindung betrifft ein Verfahren zum Kalibrieren mindestens eines Fördergeräts zum Fördern von Flüssigkeit und/oder Luft einer Dosiervorrichtung zum Dosieren einer Flüssigkeit von mindestens einem Einlass zu mindestens einem Auslass, insbesondere von mindestens einem Behälter zu mindestens einem Einspülverteiler und/oder mindestens einem Zielgerät, mittels des mindestens einen Fördergeräts, wobei ein Detektionsbereich mindestens eines Detektors zur Unterscheidung zwischen Flüssigkeit und Luft zwischen dem mindestens einen Einlass und dem mindestens einen Auslass angeordnet ist.

Zudem betrifft die Erfindung ein Verfahren zum Dosieren einer Flüssigkeit von mindestens einem Einlass zu mindestens einem Auslass, insbesondere von mindestens einem Behälter zu mindestens einem Einspülverteiler und/oder mindestens einem Zielgerät, mittels mindestens eines Fördergeräts zum Fördern von Flüssigkeit und/oder Luft, wobei ein Detektionsbereich mindestens eines Detektors zur Unterscheidung zwischen Flüssigkeit und Luft zwischen dem mindestens einen Einlass und dem mindestens einen Auslass angeordnet ist.

Aus der US 7 916 299 B2 und der EP 0 753 721 B1 sind Dosiervorrichtungen bekannt, bei denen Flüssigkeiten durch einen Einlass mittels einer Pumpe in eine Leitung eingesaugt werden, mittels Detektion der Übergänge zwischen Luft und Flüssigkeit in der Leitung erkannt und dosiert werden, und schließlich zurückgefördert und durch den Einlass wieder abgegeben werden.

Verfahren zum Kalibrieren eingangs erwähnter Art sind aus dem Dokument DE 10 2016 125 928 A1 bereits bekannt. Ein Detektor zur Unterscheidung von Flüssigkeit und/oder Luft ist stromabwärts einer Pumpe im Förderweg angeordnet. Der Detektor wird dazu verwendet, einen Leerstand in seinem Detektionsbereich zu detektieren. Ein Leerstandsignal kann an eine Steuerung übermittelt werden. Damit kann beispielsweise ein Vorratsmangel der Flüssigkeit detektiert werden. Zudem kann die Steuereinheit nach Erhalt eines Leerstandsignals eine Information über die Förderleistung der Pumpe ermitteln. Beispielsweise kann die Zeitdauer zwischen dem Beginn und dem Ende der Förderung eines bekannten Volumens von Flüssigkeit, wobei das Ende der Förderung durch das Leerstandsignal getriggert wird, zur Bestimmung der Förderleistung der Pumpe verwendet werden. Eine Dosiervorrichtung kann unter Kenntnis der Förderleistung kalibriert werden.

Ein Leerstand im Detektionsbereich des Detektors wird dadurch gemessen, dass in dem Abschnitt des Förderwegs zwischen dem Einlass und dem Detektor Luft angesaugt wird und diese Luft (oder genauer: ein Wechsel von Flüssigkeit auf Luft im Detektionsbereich) detektiert wird.

Als Konsequenz befindet sich danach im Förderweg ein Leervolumen, welches vom Einlass bis zum Detektionsbereich reicht.

Wenn, nach einer Leerstanddetektion, beispielsweise nach dem Anschließen eines neuen Behälters oder dem Wiederauffüllen, eine Förderung der Flüssigkeit gestartet wird, muss das Fördergerät zusätzlich zum bekannten Volumen oder gewünschten Volumen von Flüssigkeit die angesaugte Luft aus dem Förderweg fördern.

Bei einer Dosierung ausgehend von einer solchen Situation wird daher unterdosiert, da die Förderleistung des Fördergeräts auch für das Leervolumen aufgebracht werden muss und somit weniger Flüssigkeit als durch die vorgegebene Zeitdauer oder Anzahl der Pumpzyklen zu erwarten wäre aus dem Auslass gefördert wird.

Bei einer Kalibrierung, bei welcher das Kalibrierintervall durch die Detektion von einem Wechsel von Flüssigkeit auf Luft abgebrochen wird, läuft das Fördergerät länger (oder durchläuft mehr Pumpzyklen) als es bei einer Förderung des bekannten Volumens allein laufen würde. Dies ist aufgrund der Tatsache, dass die Luft vom Einlass bis zum Detektionsbereich gefördert werden muss, um einen Leerstand zu detektieren. Dies führt zu einer Unterschätzung der Förderleistung des Fördergeräts. Bei folgenden Dosierungen ohne Leervolumen im Förderweg vorhanden ist, hat man daher mit einer Überdosierung zu rechnen.

Die Erfindung hat zur Aufgabe, diese Nachteile des Stands der Technik zu lösen. Insbesondere ist eine Aufgabe der Erfindung, eine genaue Kalibrierung eines Fördergeräts und/oder eine genaue Dosierung mittels einer Dosiervorrichtung zu realisieren.

Die Aufgabe wird gelöst durch ein Verfahren zum Kalibrieren aus Anspruch 1, ein Verfahren zum Dosieren aus Anspruch 3 und einer Dosiervorrichtung aus Anspruch 12.

Im Folgenden wird mit dem Begriff "Zählspanne" eine Zeitspanne und/oder eine gewisse Anzahl an Pumpzyklen und/oder eine Anzahl an Standardvolumeinheiten gemeint. Mit dem Begriff "Zählpunkt" wird ein Zeitpunkt und/oder ein Zählstand der Anzahl der Pumpzyklen und/oder ein Zählstand von Standardvolumeinheiten gemeint.

Eine Zählspanne kann von einer Steuereinheit des Fördergeräts oder einer Aufzeichnungseinheit auf jede bekannte Art und Weise bestimmt werden. Beispielsweise kann das Intervall zwischen zwei Zählpunkten berechnet werden, wie beispielsweise die Berechnung einer Zeitspanne zwischen von einer Uhr aufgezeichneten Startzeitpunkt und Endzeitpunkt. Auch kann eine Fördergröße, beispielsweise die Zeit oder die Anzahl der Hübe oder ein Standardfördervolumen, während dem Fördern inkrementiert oder kumuliert werden. Es kann eine Fördergröße aufgezeichnet werden und im Nachhinein eine Zählspanne errechnet werden, beispielsweise durch Integration.

Ein erfindungsgemäßes Verfahren zum Kalibrieren mindestens eines Fördergeräts weist in einer ersten Variante die folgenden Verfahrensschritte auf:
- Anschließen von mindestens einem, insbesondere austauschbaren, Behälter an den mindestens einen Einlass mittels mindestens einer Andockeinheit zum Ankoppeln an den mindestens einen Behälter und/oder mittels einer Sauglanze zum Einbringen in den mindestens einen Behälter, wobei der Detektionsbereich des mindestens einen Detektors in der Andockeinheit und/oder in oder an der Sauglanze angeordnet ist,
- Start des Förderns von Flüssigkeit und/oder Luft durch Ansprechen des mindestens einen Fördergeräts zu einem Startzählpunkt,
- Detektion eines Wechsels von Flüssigkeit auf Luft im Detektionsbereich durch den mindestens einen Detektor zu einem Luftdetektionszählpunkt,
- Verwendung des Intervalls zwischen dem Startzählpunkt und dem Luftdetektionszählpunkt als Kalibrierzählspanne zum Kalibrieren des mindestens einen Fördergeräts.

Die Detektion eines Wechsels von Flüssigkeit auf Luft im Detektionsbereich durch den mindestens einen Detektor zu einem Luftdetektionszählpunkt erfolgt, wenn im mindestens einen Behälter ein Leerstand vorliegt. Bis zur Detektion des Wechsels von Luft auf Flüssigkeit muss Luft bis zum Detektionsbereich gefördert werden. Dadurch erfolgt die Detektion eines Wechsels von Flüssigkeit auf Luft verspätet.

Da erfindungsgemäß der Detektionsbereich des mindestens einen Detektors in der Andockeinheit und/oder in oder an der Sauglanze angeordnet ist, wobei die Andockeinheit am Behälter angeordnet ist, ist das Leervolumen zwischen Einlass und Detektionsbereich klein und die Detektion erfolgt nur wenig verspätet.

Die Aufgabe, eine genaue Kalibrierung eines Fördergeräts zu realisieren, wird in der ersten Variante der Erfindung dadurch gelöst, dass der Detektionsbereich des Detektors in einer Andockeinheit zum Ankoppeln an einen Behälter und/oder in oder an einer Sauglanze zum Einbringen in einen Behälter angeordnet ist. Die Kalibrierung wird dadurch genau, dass das Leervolumen verkleinert wird, sodass es innerhalb einer gewünschten Toleranz liegt und vernachlässigbar ist.

Ein weiterer Vorteil der Anordnung des Detektionsbereichs in einer Andockeinheit und/oder einer Sauglanze (nahe am Einlass) unabhängig von einer erhöhten Genauigkeit einer Kalibrierung ist, dass wenig Leervolumen gefördert werden muss. Das spart Zeit und Energie.

Bei der Verwendung des Intervalls zwischen dem Startzählpunkt und dem Luftdetektionszählpunkt als Kalibrierzählspanne wird die Kalibrierzählspanne mit einem bekannten Referenzvolumen, insbesondere dem gesamten Inhalt des Behälters, verglichen. Darauf basierend werden die Dosierparameter angepasst und das Fördergerät kalibriert. Dieser Schritt kann automatisch erfolgen, insbesondere in einer Steuereinheit der Dosiervorrichtung und/oder des Fördergeräts.

Zwischen dem Startzählpunkt und dem Luftdetektionszählpunkt wurde in der ersten Variante der Erfindung bevorzugt ein bekanntes oder messbares Referenzvolumen, insbesondere der gesamte bekannte Inhalt des Behälters, und ein Leervolumen gefördert. Bevorzugt ist das Leervolumen weniger als 5 Prozent, bevorzugt weniger als 2 Prozent und besonders bevorzugt weniger als 1 Prozent des Referenzvolumens groß.

In einer zweiten erfindungsgemäßen Variante der Erfindung ist sind die folgenden Verfahrensschritte vorgesehen:
- Anschließen von mindestens einem, insbesondere austauschbaren, Behälter an den mindestens einen Einlass,
- Start des Förderns von Flüssigkeit und/oder Luft durch Ansprechen des mindestens einen Fördergeräts zu einem Startzählpunkt,
- Detektion eines Wechsels von Luft auf Flüssigkeit im Detektionsbereich durch den mindestens einen Detektor zu einem Flüssigkeitsdetektionszählpunkt,
- Detektion eines Wechsels von Flüssigkeit auf Luft im Detektionsbereich durch den mindestens einen Detektor zu einem Luftdetektionszählpunkt,
- Verwendung des Intervalls zwischen dem Flüssigkeitsdetektionszählpunkt und dem Luftdetektionszählpunkt als Kalibrierzählspanne.

Wie zur ersten Variante ausgeführt, erfolgt die Detektion eines Wechsels von Flüssigkeit auf Luft im Detektionsbereich durch den mindestens einen Detektor zu einem Luftdetektionszählpunkt, wenn im mindestens einen Behälter ein Leerstand vorliegt. Bis zur Detektion des Wechsels von Luft auf Flüssigkeit muss Luft bis zum Detektionsbereich gefördert werden. Dadurch erfolgt die Detektion eines Wechsels von Flüssigkeit auf Luft verspätet.

Zudem befindet sich bereits vor dem Anschließen des Behälters typischerweise ein Leervolumen im Förderweg, welches sich vom Einlass bis zum Detektionsbereich erstreckt. Insbesondere existiert das Leervolumen zwischen Einlass und Detektionsbereich, wenn ein Leerstand eines vorhergehenden Behälters mittels einer Detektion eines Wechsels von Flüssigkeit auf Luft im Detektionsbereich detektiert wurde.

Da erfindungsgemäß ein Wechsel von Luft auf Flüssigkeit im Detektionsbereich durch den mindestens einen Detektor zu einem Flüssigkeitsdetektionszählpunkt detektiert wird, kann bestimmt werden, wann (oder bei welchem Zählstand) das Leervolumen vollständig über den Detektionsbereich hinaus gefördert wurde.

Das Leervolumen kann dadurch kompensiert werden, dass erfindungsgemäß das Intervall zwischen dem Flüssigkeitsdetektionszählpunkt und dem Luftdetektionszählpunkt als Kalibrierzählspanne verwendet wird (und nicht etwa das Intervall zwischen dem Startzählpunkt und dem Luftdetektionszählpunkt wie in der ersten Variante). Damit wird das Leervolumen berücksichtigt und kann kompensiert werden.

Der Ort des Detektionsbereichs im Förderweg ist unter Anwendung dieses Verfahrens nicht mehr ausschlaggebend, obwohl der die Größe des Leervolumens vom Ort des Detektionsbereichs abhängt und eine Anordnung des Detektionsbereichs immer noch bevorzugt ist.

Die Aufgabe eine genaue Kalibrierung eines Fördergeräts zu realisieren, wird in der zweiten Variante der Erfindung dadurch gelöst, dass das Leervolumen mittels Verwendung des Intervalls zwischen dem Flüssigkeitsdetektionszählpunkt und dem Luftdetektionszählpunkt als Kalibrierzählspanne berücksichtigt und kompensiert werden kann.

Bei der Verwendung des Intervalls zwischen dem Flüssigkeitsdetektionszählpunkt und dem Luftdetektionszählpunkt als Kalibrierzählspanne wird die Kalibrierzählspanne mit einem bekannten Referenzvolumen, insbesondere dem gesamten Inhalt des Behälters, verglichen. Darauf basierend werden die Dosierparameter angepasst und das Fördergerät kalibriert. Dieser Schritt kann automatisch erfolgen, insbesondere in einer Steuereinheit der Dosiervorrichtung und/oder des Fördergeräts.

Zwischen dem Flüssigkeitsdetektionszählpunkt und dem Luftdetektionszählpunkt kann ein bekanntes oder messbares Referenzvolumen gefördert werden.

Besonders bevorzugt ist der folgende Verfahrensschritt vorgesehen: Stopp des Förderns von Flüssigkeit und/oder Luft durch Ansprechen des mindestens einen Fördergeräts aufgrund der Detektion eines Wechsels von Flüssigkeit auf Luft. Mittels der Detektion eines Wechsels von Flüssigkeit auf Luft wurde, wenn auch gegebenenfalls verspätet, ein Leerstand im mindestens einen Behälter detektiert. Um zu verhindern, dass unnötig viel Luft gefördert wird und um das Leervolumen nach einem Behälterwechsel möglichst klein und vorhersehbar zu halten wird das Fördern gestoppt.

Gemäß einer bevorzugten Ausführungsform des Verfahrens kann der folgende Verfahrensschritt vorgesehen sein:
- Stopp des Förderns von Flüssigkeit und/oder Luft durch Ansprechen des mindestens einen Fördergeräts aufgrund der Detektion eines Wechsels von Flüssigkeit auf Luft.

In einem bevorzugten Ausführungsbeispiel ist vorgesehen, dass mehrere separate Dosiervorgänge innerhalb der Kalibrierungszählspanne durchgeführt werden. Es ist dabei vorzugsweise vorgesehen, dass das Fördern mittels des mindestens einen Fördergeräts vor der Detektion eines Wechsels von Flüssigkeit auf Luft im Detektionsbereich des Detektors zu einem Luftdetektionszählpunkt unterbrochen wird. Es ist also nicht notwendig, dass die Kalibrierzählspanne in einem Stück durchlaufen wird. Es können dagegen mehrere Dosiervorgänge während der Kalibrierungszählspanne durchgeführt werden.

Gemäß einer bevorzugten Ausführungsform des Verfahrens kann vorgesehen sein, dass mehrere separate Dosiervorgänge zwischen dem Startzählpunkt und dem Luftdetektionszählpunkt durchgeführt werden.

Dazu kann ein Zählerstand, beispielsweise in der Steuereinheit, gespeichert sein, der nach der Unterbrechung weiter inkrementiert wird. Der Zähler kann beispielsweise die Dosierzeit oder die Anzahl der Pumpzyklen inkrementieren.

Zusätzlich oder alternativ kann vorgesehen sein, dass ein Dosierprogramm mit Anweisungen zur Ausführung von Dosiervorgängen ausgeführt wird, wobei das Fördern der Flüssigkeit zur Kalibrierung im Zuge der Ausführung des Dosierprogramms vonstattengeht, insbesondere wenn im Betrieb ohnehin Flüssigkeit gefördert werden würde.

Gemäß einer bevorzugten Ausführungsform des Verfahrens kann vorgesehen sein, dass ein Dosierprogramm mit Anweisungen zum Ausführen von Dosiervorgängen ausgeführt wird, wobei das Fördern der Flüssigkeit zur Kalibrierung im Zuge der Ausführung des Dosierprogramms vonstattengeht, insbesondere wenn im Betrieb der Dosiervorrichtung ohnehin Flüssigkeit gefördert werden würde.

Damit kann die Kalibrierung während des Dosierbetriebs ausgeführt werden. Für den ersten Betrieb ohne Kalibrierung kann dazu eine leichte Überdosierung gewählt werden, sodass auch bei falsch voreingestelltem Fördergerät genügend Flüssigkeit gefördert wird.

Ein erfindungsgemäßes Verfahren zum Dosieren einer Flüssigkeit weist die folgenden Verfahrensschritten auf:
- Anschließen von mindestens einem, insbesondere austauschbaren, Behälter an den mindestens einen Einlass,
- Start des Förderns von Flüssigkeit und/oder Luft durch Ansprechen des mindestens einen Fördergeräts zu einem Startzählpunkt,
- Detektion eines Wechsels von Luft auf Flüssigkeit im Detektionsbereich durch den mindestens einen Detektor zu einem Flüssigkeitsdetektionszählpunkt,
- Stopp des Förderns von Flüssigkeit und/oder Luft durch Ansprechen des mindestens einen Fördergeräts, wobei der Flüssigkeitsdetektionszählpunkts zur Bestimmung des Zählpunkts des Stopps berücksichtigt wird.

Wie zur zweiten Variante des Kalibrierverfahrens ausgeführt, erfolgt die Detektion eines Wechsels von Flüssigkeit auf Luft im Detektionsbereich durch den mindestens einen Detektor zu einem Luftdetektionszählpunkt, wenn im mindestens einen Behälter ein Leerstand vorliegt. Bis zur Detektion des Wechsels von Luft auf Flüssigkeit muss Luft bis zum Detektionsbereich gefördert werden. Dadurch erfolgt die Detektion eines Wechsels von Flüssigkeit auf Luft verspätet.

Zudem befindet sich bereits vor dem Anschließen des Behälters typischerweise ein Leervolumen im Förderweg, welches sich vom Einlass bis zum Detektionsbereich erstreckt. Insbesondere existiert das Leervolumen zwischen Einlass und Detektionsbereich, wenn ein Leerstand eines vorhergehenden Behälters mittels einer Detektion eines Wechsels von Flüssigkeit auf Luft im Detektionsbereich detektiert wurde.

Da erfindungsgemäß ein Wechsel von Luft auf Flüssigkeit im Detektionsbereich durch den mindestens einen Detektor zu einem Flüssigkeitsdetektionszählpunkt detektiert wird, kann bestimmt werden, wann (oder bei welchem Zählstand) das Leervolumen vollständig über den Detektionsbereich hinaus gefördert wurde.

Daher kann das Leervolumen dadurch kompensiert werden, dass erfindungsgemäß der Flüssigkeitsdetektionszählpunkts zur Bestimmung des Zählpunkts des Stopps berücksichtigt wird.

Der Ort des Detektionsbereichs im Förderweg ist unter Anwendung dieses Verfahrens nicht mehr ausschlaggebend, obwohl der die Größe des Leervolumens vom Ort des Detektionsbereichs abhängt und eine Anordnung des Detektionsbereichs immer noch bevorzugt ist.

Die Aufgabe eine genaue Dosierung mittels einer Dosiervorrichtung zu realisieren, wird dadurch gelöst, dass das ein Flüssigkeitsdetektionszählpunkt bestimmt wird und dieser Flüssigkeitsdetektionspunkt zur Bestimmung des Zählpunkts des Stopps berücksichtigt wird.

In einem bevorzugten Ausführungsbeispiel wird der Flüssigkeitszählpunkt folgendermaßen berücksichtigt: Stopp des Förderns von Flüssigkeit und/oder Luft durch Ansprechen des mindestens einen Fördergeräts nach dem Ablauf einer von einer Steuereinheit vorgegebenen regulären Dosierzählspanne gezählt ab dem Flüssigkeitsdetektionszählpunkt.

Gemäß einer bevorzugten Ausführungsform des Verfahrens kann der folgende Verfahrensschritt vorgesehen sein:
- Stopp des Förderns von Flüssigkeit und/oder Luft durch Ansprechen des mindestens einen Fördergeräts nach dem Ablauf einer von einer Steuereinheit vorgegebenen regulären Dosierzählspanne gezählt ab dem Flüssigkeitsdetektionszählpunkt.

Nach der Detektion eines Wechsels von Luft auf Flüssigkeit, also nachdem das Leervolumen über den Detektionsbereich hinaus gefördert wurde, kann solange (oder für so viele Pumpzyklen) gefördert werden, wie regulär für das gewünschte Flüssigkeitsvolumen vorgesehen wäre. Die Zählspanne zwischen dem Start des Fördergeräts und dem Flüssigkeitsdetektionszählpunkt, entsprechend der Leerförderzählspanne zum Fördern des Leervolumens, kann so die Dosierung nicht verfälschen.

In einem alternativen Ausführungsbeispiel können die folgenden Verfahrensschritte vorgesehen sein:
- Berechnung einer Leerförderzählspanne als Intervall zwischen dem Startzählpunkt und dem Flüssigkeitsdetektionszählpunkt,
- Anpassung der regulären Dosierzählspanne durch die Leerförderzählspanne, insbesondere Berechnung einer korrigierten Dosierzählspanne aus einer Addition der regulären Dosierzählspanne und der Leerförderzählspanne,
- Stopp des Förderns von Flüssigkeit und/oder Luft durch Ansprechen des mindestens einen Fördergeräts nach dem Ablauf der korrigierten Dosierzählspanne gezählt ab dem Startzählpunkt.

Gemäß einer bevorzugten Ausführungsform des Verfahrens können folgende Verfahrensschritte vorgesehen sein:
- Berechnung einer Leerförderzählspanne als Intervall zwischen dem Startzählpunkt und dem Flüssigkeitsdetektionszählpunkt,
- Anpassung der regulären Dosierzählspanne durch die Leerförderzählspanne, insbesondere Berechnung einer korrigierten Dosierzählspanne aus einer Addition der regulären Dosierzählspanne und der Leerförderzählspanne,
- Stopp des Förderns von Flüssigkeit und/oder Luft durch Ansprechen des mindestens einen Fördergeräts nach dem Ablauf der korrigierten Dosierzählspanne gezählt ab dem Startzählpunkt.

Damit wird die Leerförderzählspanne explizit berechnet und zur rechnerischen Anpassung der regulären Dosierzählspanne verwendet. Die berechnete Leerförderzählspanne kann auch auf andere Art weiterverwendet werden. Die Berechnung kann in der Steuereinheit des Fördergeräts erfolgen.

In einem Ausführungsbeispiel ist zudem der folgende Verfahrensschritt vorgesehen:
- Detektion eines Wechsels von Flüssigkeit auf Luft im Detektionsbereich durch den mindestens einen Detektor zu einem Luftdetektionszählpunkt und Stopp des Förderns durch Ansprechen des mindestens einen Fördergeräts.

Gemäß einer bevorzugten Ausführungsform des Verfahrens kann der folgende Verfahrensschritt vorgesehen sein:
- Detektion eines Wechsels von Flüssigkeit auf Luft im Detektionsbereich durch den mindestens einen Detektor zu einem Luftdetektionszählpunkt und Stopp des Förderns durch Ansprechen des mindestens einen Fördergeräts.

So kann auch im Kontext des Dosierverfahrens ein Leerstand detektiert werden, wenn Luft angesaugt wird. Das Fördern kann dann gestoppt werden.

Bevorzugt kann das Dosierverfahren zu einem Kalibrierverfahren mit einer im Vorhinein fixierten, gewählten Kalibrierzählspanne und einem nicht im Vorhinein fixierten, nach dem Fördern gemessenen Referenzvolumen ausgebaut werden.

Dazu sind die folgenden zusätzlichen Verfahrensschritte vorgesehen:
- Stopp des Förderns von Flüssigkeit und/oder Luft durch Ansprechen des mindestens einen Fördergeräts nach dem Ablauf einer gewählten Kalibrierzählspanne gezählt ab dem Startzählpunkt,
- Verwendung des Intervalls zwischen dem Flüssigkeitsdetektionszählpunkt und dem Zählpunkt beim Ablauf der gewählten Kalibrierzählspanne als korrigierte Kalibrierzählspanne zum Kalibrieren des mindestens einen Fördergeräts.

Gemäß einer bevorzugten Ausführungsform des Verfahrens können folgende Verfahrensschritte vorgesehen sein:
- Stopp des Förderns von Flüssigkeit und/oder Luft durch Ansprechen des mindestens einen Fördergeräts nach dem Ablauf einer gewählten Kalibrierzählspanne gezählt ab dem Startzählpunkt,
- Verwendung des Intervalls zwischen dem Flüssigkeitsdetektionszählpunkt und dem Zählpunkt beim Ablauf der gewählten Kalibrierzählspanne als korrigierte Kalibrierzählspanne zum Kalibrieren des mindestens einen Fördergeräts.

In einem Ausführungsbeispiel ist der Detektionsbereich des Detektors im Förderweg zwischen dem mindestens einen Einlass und dem mindestens einen Fördergerät angeordnet, also stromaufwärts des Fördergeräts.

Gemäß einer bevorzugten Ausführungsform des Verfahrens kann vorgesehen sein, dass der Detektionsbereich des mindestens einen Detektors
- zwischen dem mindestens einen Einlass und dem mindestens einen Fördergerät im Förderweg zwischen Einlass und Auslass angeordnet ist, und/oder
- in dem dem mindestens einen Einlass angrenzenden Viertel, bevorzugt Achtel und besonders bevorzugt Zehntel des Förderwegs zwischen Einlass und Auslass angeordnet ist, und/oder
- weniger als 150 Zentimeter, bevorzugt weniger als 100 Zentimeter, besonders bevorzugt weniger als 50 Zentimeter vom mindestens einen Einlass entfernt im Förderweg angeordnet ist.

In einem Ausführungsbeispiel ist der Detektionsbereich in der dem mindestens einen Einlass angrenzenden Hälfte, bevorzugt Viertel, besonders bevorzugt Achtel, des Förderwegs zwischen Einlass und Auslass angeordnet.

In einem Ausführungsbeispiel ist der Detektionsbereich weniger als 150 Zentimeter, bevorzugt weniger als 100 Zentimeter, besonders bevorzugt weniger als 50 Zentimeter vom mindestens einen Einlass entfernt im Förderweg angeordnet.

Der Förderweg kann länger als ein Meter, bevorzugt länger als drei Meter und besonders bevorzugt länger als sechs Meter sein. Insbesondere kann der Auslass in einem anderen Raum als der Einlass angeordnet sein, zum Beispiel, wenn die Flüssigkeitsbehälter in einem anderen Raum wie ein Zielgerät, beispielsweise eine Waschmaschine, angeordnet sind.

Damit ist das Leervolumen relativ, insbesondere relativ zum restlichen Volumen im Förderweg oder relativ zu einem Behältervolumen, klein gehalten, sodass Förderzeit und Energie gespart wird.

Bevorzugt kann vorgesehen sein, dass der mindestens eine Einlass im oder am mindestens einen Behälter angeordnet wird, vorzugsweise wobei der mindestens eine Behälter in flüssigkeitsleitende Verbindung mit dem mindestens einen Fördergerät gebracht wird. Damit wird der mindestens eine Behälter an der Dosiervorrichtung angeschlossen.

Gemäß einer bevorzugten Ausführungsform des Verfahrens kann vorgesehen sein, dass der mindestens eine Einlass im oder am mindestens einen Behälter angeordnet wird, vorzugsweise wobei der mindestens eine Behälter in flüssigkeitsleitende Verbindung mit dem mindestens einen Fördergerät gebracht wird.

In einem Ausführungsbeispiel kann vorgesehen sein, dass der mindestens eine Behälter ein Initialvolumen enthält.

Gemäß einer bevorzugten Ausführungsform des Verfahrens kann vorgesehen sein, dass der mindestens eine Behälter ein Initialvolumen enthält, wobei
- das gesamte Initialvolumen gefördert wird, um eine Kalibrierung durchzuführen, wobei das Initialvolumen als Referenzvolumen verwendet wird, und/oder
- das Initialvolumen von einem, vorzugsweise am mindestens einen Behälter oder an einem Einsatz im Behälter angeordneten, Datenträger, insbesondere einem RFID-Tag, ausgelesen und an die Dosiervorrichtung übertragen wird, und/oder
- das Initialvolumen vom Bediener eingegeben wird, und/oder
- das Initialvolumen einem Standardvolumen entspricht und vorab eingespeichert wird.

Es ist bevorzugt vorgesehen, dass das gesamte Initialvolumen gefördert wird, um eine Kalibrierung durchzuführen. Das Initialvolumen dient als Referenzvolumen für die Kalibrierung. Der "Anfang" und das "Ende" des Initialvolumens im Detektionsbereich können vom Detektor detektiert werden. Die dazwischen liegenden Kalibrierzählspanne kann dann mit dem Initialvolumen zusammen zu einem Kalibrierwert für das Fördergerät berechnet werden.

Es kann vorgesehen sein, dass das Initialvolumen von einem, vorzugsweise am mindestens einen Behälter oder an einem Einsatz im Behälter angeordneten, Datenträger, insbesondere einem RFID-Tag, ausgelesen und an die Dosiervorrichtung übertragen wird.

Vorteilhaft bei der Verwendung eines Datenträgers am Behälter ist, dass unterschiedliche Intialvolumina je nach Behältertyp und/oder Füllhöhe eines jeweiligen Behälters am Datenträger gespeichert werden können, sodass immer das richtige Referenzvolumen für die Kalibrierung bereitgestellt werden kann.

Das Initialvolumen kann beim Befüllen des Behälters oder bei der Entnahme des Behälters von der Dosiervorrichtung eingeschrieben werden. Es kann auch laufend, beispielsweise nach jeder Dosierung, am Datenträger geupdatet werden.

Zusätzlich oder alternativ kann vorgesehen sein, dass das Initialvolumen vom Bediener eingegeben wird, sodass die Dosiervorrichtung in Kenntnis des Initialvolumens ist.

Zusätzlich oder alternativ kann vorgesehen sein, dass das Initialvolumen einem Standardvolumen entspricht und vorab, beispielsweise ab Werk, in der Dosiervorrichtung eingespeichert wird. Dies ist ausreichend, wenn immer der gleiche Behältertyp mit dem gleichen Füllstand verwendet wird.

Die Flüssigkeit, insbesondere ein chemisches Produkt wie Reinigungsmittel, Bleichmittel oder Klarspüler, kann im austauschbaren Behälter zur Verfügung gestellt werden. Wenn ein Behälter leer ist, kann dieser Behälter durch einen neuen, vollen Behälter ausgetauscht werden.

In einem Ausführungsbeispiel wird das Verfahren zur Kalibrierung zur Kalibrierung nach dem Einsetzen eines, vorzugsweise jeden, weiteren Behälters verwendet. Nach der letzten Dosierung des vorhergehenden Behälters, bei welchem ein Leerstand detektiert wurde, befindet sich ein Leervolumen im Förderweg. Mittels des Verfahrens zur Kalibrierung kann das Leervolumen kompensiert werden, sodass die Kalibrierung nicht verfälscht wird.

Gemäß einer bevorzugten Ausführungsform des Verfahrens kann vorgesehen sein, dass das Verfahren zur Kalibrierung und/oder zum Dosieren nach dem Einsetzen eines, vorzugsweise jeden, weiteren Behälters verwendet wird, besonders bevorzugt wobei ein Zählerstand der Steuereinheit vor der Kalibrierung und/oder Dosierung resettet wird.

Bevorzugt kann vorgesehen sein, dass ein Zählerstand der Steuereinheit vor der Nachkalibrierung resettet wird. Beispielsweise kann eine Kalibrierzeit oder eine Anzahl an Pumpzyklen resettet werden.

In eine Ausführungsbeispiel ist der mindestens eine Detektionsbereich des mindestens einen Detektors, insbesondere auch der mindestens eine Detektor selbst, in einer Andockeinheit angeordnet, wobei der mindestens eine Behälter an die Andockeinheit, insbesondere mit einer Öffnung des mindestens einen Behälters, lösbar ankoppelbar ist. Bevorzugt ist im mindestens einen Behälter ein Einsatz mit einem Saugrohr angeordnet, wobei das Ende des Saugrohrs den mindestens einen Einlass bildet. Ein Saugrohr kann aber auch an der Andockeinheit selbst angeordnet sein. Ein Behälter kann damit flexibel ausgetauscht und an die Dosiervorrichtung angekoppelt werden.

Gemäß einer bevorzugten Ausführungsform des Verfahrens kann vorgesehen sein, dass der mindestens eine Detektionsbereich des mindestens einen Detektors in einer Andockeinheit angeordnet ist, wobei der mindestens eine Behälter an die Andockeinheit, insbesondere mit einer Öffnung des mindestens einen Behälters, lösbar ankoppelbar ist, vorzugsweise wobei im mindestens einen Behälter ein Einsatz mit einem Saugrohr angeordnet ist, wobei das Ende des Saugrohrs den mindestens einen Einlass des Förderwegs bildet.

Dadurch, dass der Detektionsbereich in der Andockeinheit angeordnet ist, ist der Detektionsbereich nahe am mindestens einen Einlass angeordnet, womit das Leervolumen relativ klein ist. Baulich ist eine Andockeinheit der optimale Platz für den Detektor, da er so nicht zusätzlich an eine Flüssigkeitsleitung angebracht werden muss.

In einem alternativen Ausführungsbeispiel kann der mindestens eine Detektionsbereich des mindestens einen Detektors, insbesondere auch der mindestens eine Detektor selbst, in oder an einer Sauglanze oder an einer Flüssigkeitsleitung des Förderwegs angeordnet sein.

In einem bevorzugten Ausführungsbeispiel kann das mindestens eine Fördergerät als steuerbare Pumpe, insbesondere Schlauchquetschpumpe oder Membranpumpe oder Kolbenpumpe oder Zahnradpumpe oder Exzenterschneckenpumpe, ausgebildet sein.

Die Pumpe kann mittels einer Steuereinheit gesteuert werden, wobei die Steuereinheit eine Anzahl der Pumpzyklen, insbesondere Umdrehungen oder Hübe, pro Zeiteinheit vorgibt. Damit kann die Fördermenge pro Zeit eingestellt werden.

Alternativ kann das mindestens eine Fördergerät als steuerbares Ventil ausgebildet sein, wobei die Flüssigkeit mithilfe der Schwerkraft vom Einlass zum Auslass strömt. Das Ventil kann mittels einer Steuereinheit mehr oder weniger geöffnet werden, womit die Fördermenge pro Zeit eingestellt werden kann.

Der mindestens eine Detektor kann auf beliebige Art und Weise ausgebildet sein. Er muss nur dazu geeignet sein, die Anwesenheit von Flüssigkeit im Detektionsbereich von der Anwesenheit von Luft, insbesondere Luftbläschen, zu unterscheiden.

Der mindestens eine Detektor kann als optischer Sensor ausgebildet sein. Flüssigkeit und Luft oder Flüssigkeit-Luft-Gemisch weisen unterschiedliche optische Eigenschaften, wie Transmittivität, Reflektivität oder Brechungsindex, auf und können daher dadurch unterschieden werden, dass von einer Lichtquelle Licht in den Detektionsbereich gesendet wird und das reflektierte oder transmittierte Licht vom optischen Sensor detektiert wird.

Beispielsweise kann ein transluzenter Flüssigkeitskanal der Andockeinheit oder ein transluzenter Schlauch vom Licht durchschienen werden.

Ähnlich kann der Detektor auch als Ultraschallsensor oder Sensor für elektromagnetische Wellen, welche eine Unterscheidung von Flüssigkeit, Luft und/oder Flüssigkeit-Luft-Gemisch erlauben, ausgebildet sein.

Alternativ kann der mindestens eine Detektor als Schwimmer mit Schalter ausgebildet sein. Der Schalter ist vorzugsweise kontaktlos, insbesondere als Reed-Schalter, ausgebildet.

Es ist auch denkbar, dass der mindestens eine Detektor auf eine andere Art, welche geeignet zur Unterscheidung von Flüssigkeit und Luft ist, ausgebildet ist, beispielsweise als Leitfähigkeitssensor.

Bevorzugt wird das mindestens eine Fördergerät von mindestens einer Steuereinheit gesteuert, vorzugsweise wobei die mindestens eine Steuereinheit als Zentralsteuereinheit, welche mindestens ein Fördergerät und/oder mindestens ein Zielgerät und/oder mindestens ein Ventil steuert, ausgebildet ist.

Es kann vorgesehen sein, dass der Detektor ein Signal an die Steuereinheit sendet, wenn ein Wechsel von Flüssigkeit auf Luft, oder umgekehrt, detektiert wird. Mithilfe dieses Signals kann die Steuereinheit den Detektionszählpunkt, beispielsweise den Detektionszeitpunkt und/oder einen Zählerstand des Fördergeräts, des entsprechenden Ereignisses bestimmen und speichern und/oder weiterverarbeiten.

In einem bevorzugten Ausführungsbeispiel erfolgt die Detektion eines Wechsels von Flüssigkeit auf Luft oder von Luft auf Flüssigkeit, wenn ein Mittelwert eines Detektorsignals, insbesondere einer Lichtintensität bei einem optischen Detektor, über einen bestimmten Detektionszeitraum einen bestimmten Schwellwert über- oder unterschreitet.

Flüssigkeit zu detektieren heißt in der Praxis "überwiegend Flüssigkeit zu detektieren" und Luft zu detektieren heißt in der Praxis "überwiegend Luft zu detektieren" wobei "überwiegend" auf einen bestimmten Schwellwert bezogen ist.

Auf Basis dieser Unterscheidung können entsprechende Signale ausgegeben werden und an eine Logikeinheit der Andockeinheit und/oder eine Steuereinheit des Fördergeräts übermittelt werden.

In einem Ausführungsbeispiel kann die Detektion eines Wechsels von Flüssigkeit auf Luft erst berücksichtigt werden, wenn eine bestimmte Anlaufzeit, insbesondere gezählt ab dem Startzählpunkt, abgelaufen ist. Damit wird eine Leerstanddetektion und ein Abbruch des Förderns bzw. der Kalibrierzählspanne erst nach einer Anlaufzeit berücksichtigt, nach welcher ein Leerstand realistisch erscheint.

In einem Ausführungsbeispiel kann die Detektion eines Wechsels von Flüssigkeit auf Luft erst berücksichtigt werden, wenn das Restvolumen an Flüssigkeit im mindestens einen Behälter ein bestimmtes Grenzvolumen, beispielsweise 20 Prozent, insbesondere 10 Prozent, des Initialvolumens, unterschreitet. Dadurch kann ein Leerstand erst dann detektiert werden, wenn er auch realistischerweise vorliegen kann.

Unregelmäßigkeiten während des Anlaufens können damit berücksichtigt werden.

Es kann vorgesehen sein, dass das Restvolumen an Flüssigkeit im mindestens einen Behälter in der mindestens einen Dosiervorrichtung, insbesondere in der Steuereinheit, und/oder in einem Datenträger des mindestens einen Behälters gespeichert und nach einem Fördern aktualisiert wird. Damit kann über das Restvolumen abgeschätzt werden, ohne es direkt messen zu müssen.

Wenn das Restvolumen in den Datenträger des mindestens einen Behälters gespeichert wird, kann bei einem erneuten Anschließen an eine andere oder dieselbe Dosiervorrichtung das gespeicherte Restvolumen als Initialvolumen für ein Kalibrierverfahren verwendet werden.

Zusätzlich oder alternativ kann das Restvolumen an Flüssigkeit im mindestens einen Behälter mittels eines Sensors gemessen werden, beispielsweise mittels eines Laufzeitsensors.

In einem bevorzugten Ausführungsbeispiel ist der mindestens eine Datenträger als elektronischer Datenträger, insbesondere als RFID-Transponder, ausgebildet. RFID-Transponder können einfach kontaktlos ausgelesen oder beschrieben werden.

In einem alternativen Ausführungsbespiel kann der mindestens eine Datenträger als gedruckter Datenträger, insbesondere als Barcode oder QR-Code ausgeformt sein. Gedruckte Datenträger sind besonders kostengünstig.

Es kann vorgesehen sein, dass der mindestens eine Datenträger mittels eines Lesegeräts der Dosiervorrichtung, insbesondere kontaktlos, ausgelesen wird. Das Lesegerät kann als als RFID-Lesegerät zum Lesen von RFID-Transpondern oder optischer Scanner zum Lesen von Barcodes oder QR-Codes ausgebildet sein.

Es kann vorgesehen sein, dass der mindestens eine Datenträger mittels mindestens eines Schreibgeräts der Dosiervorrichtung, insbesondere kontaktlos, beschrieben wird. Bevorzugt ist das Lesegerät als Lese-Schreib-Gerät ausgebildet. Das Schreibgerät bzw. Lese-Schreib-Gerät kann insbesondere die RFID-Technologie benutzen.

Eine erfindungsgemäße Dosiervorrichtung weist Mittel auf, das Verfahren zum Kalibrieren und/oder Dosieren auszuführen.

In einem Ausführungsbeispiel der Dosiervorrichtung ist der mindestens eine Einlass in mindestens einem Behälter angeordnet.

Es ist dabei vorzugsweise vorgesehen, dass der mindestens eine Behälter mittels einer Andockeinheit an die Dosiervorrichtung ankoppelbar ist.

Zusätzlich oder alternativ kann vorgesehen sein, dass im mindestens einen Behälter ein Einsatz angeordnet ist, besonders bevorzugt wobei am Einsatz ein Datenträger, insbesondere eine RFID-Tag, angeordnet ist. Der Datenträger kann auch direkt am Behälter angeordnet sein.

In einem bevorzugten Ausführungsbeispiel weist die Dosiervorrichtung mindestens ein Lesegerät zum, insbesondere berührungslosen, Lesen eines, vorzugsweise am Behälter oder an einem Einsatz im Behälter angeordneten, Datenträgers auf. Damit kann beispielsweise ein Initialvolumen zum Kalibrieren des Fördergeräts ausgelesen werden.

In einem Ausführungsbeispiel kann zudem ein Schreibgerät zum, insbesondere berührungslosen, Schreiben von Daten auf den Datenträger vorgesehen sein. Insbesondere kann das Lesegeräts eine Schreibfunktion aufweisen. Mittels des Schreibgeräts kann beispielsweise das aktuelle Volumen im Behälter oder der Füllstand des Behälters auf den Datenträger geschrieben werden.

Das aktuelle Volumen im Behälter kann, vorzugsweise von der Steuereinheit, aus dem bereits geförderten Volumen errechnet werden. Alternativ kann der Füllstand gemessen werden.

In einem besonders bevorzugten Ausführungsbeispiel sind mindestens zwei Behälter und mindestens zwei Fördergeräte vorgesehen und ist jeweils ein Fördergerät pro Behälter vorgesehen. Vorzugsweise ist vorgesehen, dass die Flüssigkeit mittels des Fördergeräts in einen Einspülverteiler förderbar ist, besonders bevorzugt wobei die Flüssigkeit vom Einspülverteiler über ein Spülmedium, insbesondere Wasser, weiter zum mindestens einen Zielgerät förderbar ist.

Als Flüssigkeit wird vorzugsweise eine chemische Lösung, welche insbesondere zur Reinigung von Wäsche, Geschirr oder anderen Objekten verwendbar ist. Auch können Bleichmittel oder Klarspüler als Flüssigkeit angesehen werden. Es kann aber auch ein Spülmedium, beispielsweise Wasser, als Flüssigkeit im Sinne der vorliegenden Anmeldung angesehen werden.

Weiter Ausführungsformen und Details sind den Zeichnungen zu entnehmen. Dabei zeigen:
- Fig. 1a: Förderweg mit Leervolumen nach einer Detektion eines Wechsels von Flüssigkeit auf Luft mit einem Detektionsbereich nahe am Einlass,
- Fig. 1b: Förderweg mit Leervolumen nach einer Detektion eines Wechsels von Flüssigkeit auf Luft mit einem Detektionsbereich nahe am Auslass,
- Fig. 2a: Förderweg ohne Leervolumen nach dem Fördern mit einem Detektionsbereich nahe am Einlass,
- Fig. 2b: Förderweg ohne Leervolumen nach dem Fördern mit einem Detektionsbereich nahe am Auslass,
- Fig. 3a: Zählspannen und Zählpunkte des Dosierverfahrens in einer ersten Ausführungsform,
- Fig. 3b: Zählspannen und Zählpunkte des Dosierverfahrens in einer zweiten Ausführungsform,
- Fig. 4a: Zählspannen und Zählpunkte des Kalibrierverfahrens mit Flüssigkeitsdetektion in einem ersten Ausführungsbeispiel,
- Fig. 4b: Unterbrechung des Dosierens während des Kalibrierverfahrens der ersten Ausführungsform,
- Fig. 4c: Zählspannen und Zählpunkte des Kalibrierverfahrens mit Flüssigkeitsdetektion in einem zweiten Ausführungsbeispiel,
- Fig. 5: Zählspannen und Zählpunkte des Kalibrierverfahrens ohne Flüssigkeitsdetektion mit kleinem Leervolumen,
- Fig. 6a: Dosiervorrichtung mit Andockeinheit, Einspülverteiler und Zielgerät,
- Fig. 6b: Dosiervorrichtung mit mehreren Behältern,
- Fig. 7: Andockeinheit mit einem Detektor,
- Fig. 8a: Einsatz für den Behälter mit Saugrohr,
- Fig. 8b: Behälter mit Einsatz,
- Fig. 8c: Detailansicht des in den Behälter eingesetzten Einsatzes, und
- Fig. 9: an eine Andockeinheit angekoppelter Behälter mit Einsatz.

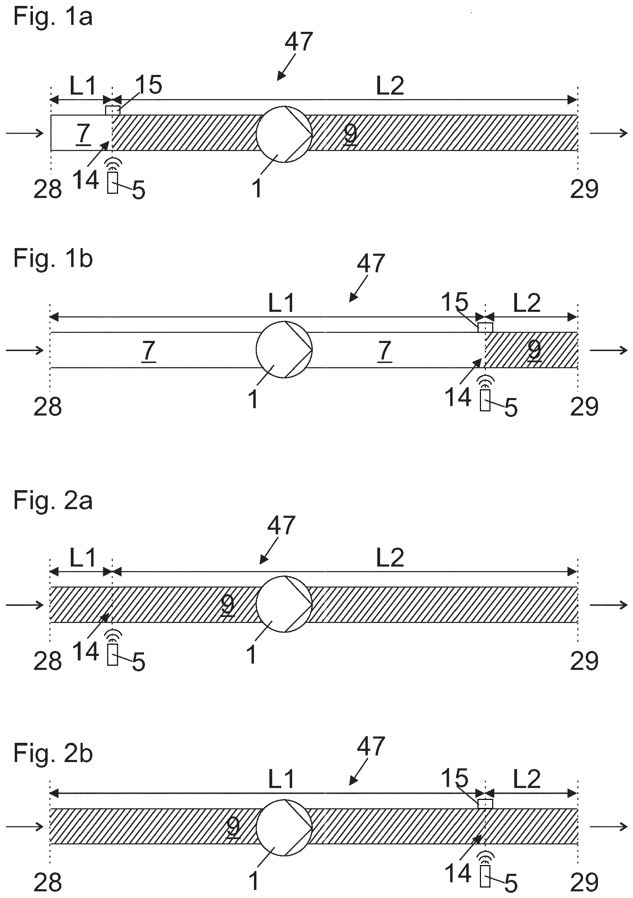

Die Figuren 1a und 1b zeigen den Förderweg 47 zwischen einem Einlass 28 und einem Auslass 29.

Im Förderweg 47 ist ein Fördergerät 1 in Form einer Pumpe angeordnet. Anstatt eine Pumpe ist aber auch ein öffenbares Ventil oder ein sonstiges Fördergerät denkbar.

Im Förderweg 47 ist ein Detektor 15 mit einem Detektionsbereich 14 angeordnet. Der Detektor 15 ist hier als optischer Detektor ausgeformt, der dazu ausgebildet ist, Licht von der Lichtquelle 5 zu empfangen. Das Licht durchscheint den Förderweg 47 und damit das im Förderweg 47 befindliche Medium. Der Detektor 15 kann durch sich unterscheidende optische Eigenschaften von Flüssigkeit 9 und Luft 7 zwischen Flüssigkeit 9 auf der einen Seite und Luft 7 auf der anderen Seite unterscheiden. Die Unterscheidung erfolgt vorzugweise nicht zwischen reiner Flüssigkeit und reiner Luft, sondern auf Basis eines Schwellwerts. Insbesondere kann eine Vielzahl von Luftbläschen im Förderweg als Luft 7 gelten.

Der Detektor 15 muss nicht als optischer Detektor ausgebildet sein. Möglich sind beispielsweise Vorrichtungen mit einem Schwimmer, wobei der Schwimmer je nachdem ob sich Flüssigkeit 9 oder Luft 7 im Detektionsbereich 14 befindet unterschiedlich stark aufschwimmt, wobei die Aufschwimmposition des Schwimmers von einem, vorzugweise kontaktlosen, Schalter detektiert werden kann. Auch andere Vorrichtungen, welche zur Unterscheidung von Flüssigkeit 9 und Luft 7 geeignet sind, sind denkbar.

In den Figuren 1a und 1b ist die Situation nach der Detektion eines Wechsels von Flüssigkeit 9 auf Luft 7 im Detektionsbereich 14 gezeigt. Typischerweise wird die Förderung durch das Fördergerät 1 nach einer solchen Detektion gestoppt. Gegebenenfalls kann eine Leerstandmeldung an den Bediener ausgegeben werden. Danach wird typischerweise der Behälter 3, in welchem sich der Einlass 28 befinden kann, durch einen vollen Behälter 3 ersetzt oder neu aufgefüllt.

In dieser Situation befindet sich im Förderweg 47 ein Leervolumen zwischen dem Einlass 28 und dem Detektionsbereich 14.

Bei einer Förderung von Flüssigkeit 9 aus dem neuen oder wiederaufgefüllten Behälter 3 muss das Leervolumen aus dem Förderweg 47 gefördert werden. Dafür muss das Fördergerät 1 länger betrieben werden.

Zudem führt ein Betreiben des Fördergeräts 1 für eine reguläre Dosierzählspanne, insbesondere eine Dosierzeitspanne oder eine Anzahl der Pumpzyklen für eine Dosierung, zu einer Fehldosierung, insbesondere Unterdosierung, da das Leervolumen mitgefördert werden muss.

Wenn eine Kalibrierung durchgeführt wird, wird durch das Leervolumen die Kalibrierung verfälscht. Die Leistung des Fördergeräts 1 wird durch die zusätzliche Förderung des Leervolumens unterschätzt. Bei folgenden Dosierungen mit der daraus gewonnen Kalibrierung sind daher Überdosierungen zu erwarten.

In der Fig. 1a ist der Detektionsbereich 14 in der Nähe des Einlasses 28 angeordnet, womit das Leervolumen relativ klein ist. Insbesondere ist L1 kleiner oder viel kleiner als L2. Das oben genannte Problem kann also verkleinert werden, indem der Detektor 15 möglichst nahe am Einlass 28 angeordnet wird, beispielsweise in einer Andockeinheit 2, welche an einen Behälter 3 ankoppelbar ist und/oder eine Sauglanze.

In der Fig. 1b ist der Detektionsbereich 14 in der Nähe des Auslasses 29 angeordnet, womit das Leervolumen relativ groß ist, insbesondere ist L2 kleiner oder viel kleiner als L1. In manchen Situationen kann das unvermeidbar sein. Vorteilhaft ist, dass sich nach einer Leerstandmeldung nur wenig Flüssigkeit im Förderweg 47 befindet, womit der Förderweg 47 nicht unnötig durch möglicherweise ätzende Eigenschaften der Flüssigkeit angegriffen wird.

Die Figuren 2a und 2b zeigen die Situation nach dem einem üblichen Dosiervorgang, wenn kein Leerstand detektiert wird. Der gesamte Förderweg 47 ist mit Flüssigkeit 9 gefüllt.

In Situationen, in denen sogar das kleine Leervolumen der Fig. 1a zu ungenauen Ergebnissen führt oder in denen der Detektor 15 aus anderen Gründen nicht nahe am Einlass 28 angeordnet wird oder werden kann, kann das erfindungsgemäße Dosierverfahren oder Kalibrierverfahren der zweiten Variante angewendet werden, wodurch die Anordnung des Detektors 15 egal ist und das Leervolumen kompensiert wird.

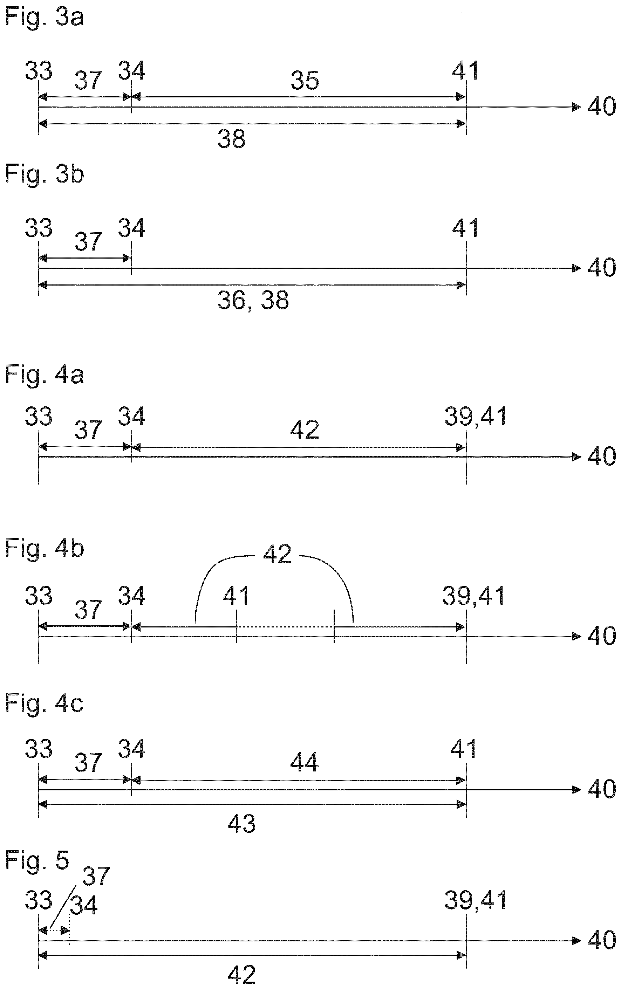

Die Figuren 3a, 3b, 4a, 4b, 4c und 5 zeigen die Achse eines Zählparameters 40 des Fördergeräts 1, beispielsweise eine Zeitachse oder die Achse eines Zählers der Anzahl der Pumpzyklen des Fördergeräts 1.

In den Ausführungsbeispielen der Figuren 3a, 3b, 4a, 4b und 4c wird das Fördern von Flüssigkeit 9 und/oder Luft 7 durch Ansprechen des mindestens einen Fördergeräts 1 zu einem Startzählpunkt 33 gestartet. Zudem wird Flüssigkeit 9 im Detektionsbereich 14 des Detektors 15 zu einem Flüssigkeitsdetektionszählpunkt 34 detektiert.

Zum Flüssigkeitszählpunkt 34 wurde ein Volumen an Flüssigkeit 9 und/oder Luft 7 gefördert, welches dem Leervolumen entspricht.

Die Fig. 3a stellt ein erstes Ausführungsbeispiel eines Dosierverfahrens dar. Nach den oben angegebenen Schritten wird mittels des mindestens einen Fördergeräts 1 nach dem Flüssigkeitsdetektionszählpunkt 34 weitergefördert. Das Fördern von Flüssigkeit 9 und/oder Luft 7 wird durch Ansprechen des mindestens einen Fördergeräts 1 nach dem Ablauf einer von einer Steuereinheit 4 vorgegebenen regulären Dosierzählspanne 35 gezählt ab dem Flüssigkeitsdetektionszählpunkt 34 gestoppt. Die reguläre Dosierzählspanne 35 ist jene Zählspanne, welche üblicherweise zum Fördern der gewünschten Menge an Flüssigkeit 9 von der Steuereinheit 4 verwendet wird. Insgesamt wird so für eine längere Gesamtförderzählspanne 38 gefördert, womit das Leervolumen kompensiert wird.

Ist kein Leervolumen vorhanden, funktioniert dieses Verfahren auch, da der Detektor 15 sofort Flüssigkeit 9 detektiert und damit der Startzählpunkt 33 mit dem Flüssigkeitsdetektionszählpunkt 34 zusammenfällt. Die Gesamtförderzählspanne 38 wäre dann gleich der regulären Dosierzählspanne 35.

Die Fig. 3b stellt ein zweites Ausführungsbeispiel eines Dosierverfahrens dar. Nach den oben angegebenen Schritten (Detektion eines Wechsels von Luft 7 auf Flüssigkeit 9), wird die Leerförderzählspanne 37 als Zählintervall zwischen dem Startzählpunkt 33 und dem Flüssigkeitsdetektionszählpunkt 34 berechnet. In der Folge wird die reguläre Dosierzählspanne 35 durch die Leerförderzählspanne 37 angepasst, insbesondere durch Berechnung einer korrigierten Dosierzählspanne 36 aus einer Addition der regulären Dosierzählspanne 35 und der Leerförderzählspanne 37. Es wird weitergefördert mittels des mindestens einen Fördergeräts 1 und nach dem Flüssigkeitsdetektionszählpunkt 34 und nach dem Ablauf der korrigierten Dosierzählspanne 36 gezählt ab dem Startzählpunkt 33 gestoppt. Die korrigierte Dosierzählspanne 36 entspricht der gesamten Förderzählspanne 38.

Die Fig. 4a zeigt eine erste Ausführungsform eines Kalibrierverfahrens mit Flüssigkeitsdetektion. Nach der Detektion von Flüssigkeit 9 zum Flüssigkeitsdetektionszählpunkt 34 wird weitergefördert. Danach wird ein Wechsel von Flüssigkeit 9 auf Luft 7 im Detektionsbereich 14 des Detektors 15 zu einem Luftdetektionszählpunkt 39 detektiert. Vorzugsweise wird daraufhin das Fördern von Flüssigkeit 9 und/oder Luft 7 durch Ansprechen des mindestens einen Fördergeräts 1 gestoppt. Ein Leervolumen befindet sich wieder im Förderweg 47 zwischen Einlass 28 und Detektor 15, wie in Fig. 1a und 1b.

Das Intervall zwischen dem Flüssigkeitsdetektionszählpunkt 34 und dem Luftdetektionszählpunkt 39 wird als Kalibrierzählspanne 42 zum Kalibrieren des mindestens einen Fördergeräts 1 verwendet. Zwischen dem Flüssigkeitsdetektionszählpunkt 34 und dem Luftdetektionszählpunkt 39 wurde ein bekanntes oder messbares Referenzvolumen gefördert, sodass die Kalibrierung mithilfe des Referenzvolumens durchgeführt werden kann. Das Referenzvolumen kann beispielsweise das Initialvolumen des Behälters 3 sein, wobei zur Kalibrierung der gesamte Inhalt des Behälters 3 gefördert wird.

Die Fig. 4b zeigt für die Ausführungsform aus Fig. 4a, dass ein Kalibriervorgang zu einem Zählpunkt 41 unterbrochen werden kann. Beispielsweise kann das Fördern für den Kalibriervorgang zu Zeiten und für Zeiten erfolgen, da die Dosiervorrichtung 32 ohnehin einen Dosiervorgang durchführt.

Die Fig. 4c zeigt eine zweite Ausführungsform eines Kalibrierverfahrens mit Flüssigkeitsdetektion. Nach der Detektion von Flüssigkeit 9 zum Flüssigkeitsdetektionszählpunkt 34 wird weitergefördert. Das Fördern von Flüssigkeit 9 und/oder Luft 7 wird nach dem Ablauf einer gewählten Kalibrierzählspanne 43, gezählt ab dem Startzählpunkt 33, gestoppt.

Das Intervall zwischen dem Flüssigkeitsdetektionszählpunkt 3 und dem Zählpunkt beim Ablauf der gewählten Kalibrierzählspanne 43 wird als korrigierte Kalibrierzählspanne 44 zum Kalibrieren des mindestens einen Fördergeräts 1 verwendet.

Im Gegensatz zum Ausführungsbeispiel der Fig. 4a hier die Zählspanne fixiert und nicht ein Referenzvolumen. Das tatsächlich geförderte Referenzvolumen muss nachträglich bestimmt werden, beispielsweise durch Messung.

Alternativ zur Detektion von Flüssigkeit zu einem Flüssigkeitsdetektionszählpunkt zum Kompensieren des Leervolumens kann das Leervolumen in manchen Vorrichtungen so klein gemacht werden, dass es innerhalb einer gewünschten Toleranz beim Kalibrieren nicht ins Gewicht fällt.

In der ersten Variante der Erfindung, wie in Fig. 5 dargestellt, wird das Fördern von Flüssigkeit 9 und/oder Luft 7 durch Ansprechen des mindestens einen Fördergeräts 1 zu einem Startzählpunkt 33 gestartet. In einem zweiten Schritt wird Luft 7 im Detektionsbereich 14 des Detektors 15 zu einem Luftdetektionszählpunkt 39 detektiert. Das Intervall zwischen dem Startzählpunkt 33 und dem Luftdetektionszählpunkt 39 wird als Kalibrierzählspanne 42 zum Kalibrieren des mindestens einen Fördergeräts 1 verwendet.

Der Detektionsbereich 14 ist in einer Andockeinheit oder einer Sauglanze am Behälter angeordnet, insbesondere in dem mindestens einen Einlass 28 angrenzenden Viertel, bevorzugt Achtel und besonders bevorzugt Zehntel, des Förderwegs 47, wie beispielsweise in Fig. 1a dargestellt. Das Leervolumen ist damit so klein, dass die Leerförderzählspanne 37 viel kleiner als die Kalibrierzählspanne 42 ist, womit die Kalibrierung genau genug ist. Der Flüssigkeitsdetektionszählpunkt 34 muss in dieser Variante nicht bestimmt werden und ist in Fig. 5 nur zum Vergleich dargestellt.

Zwischen dem Startzählpunkt 34 und dem Luftdetektionszählpunkt 39 wird ein bekanntes oder messbares Referenzvolumen und ein Leervolumen gefördert, wobei das Leervolumen weniger als 5 Prozent, bevorzugt weniger als 2 Prozent und besonders bevorzugt weniger als 1 Prozent des Referenzvolumens groß sein kann.

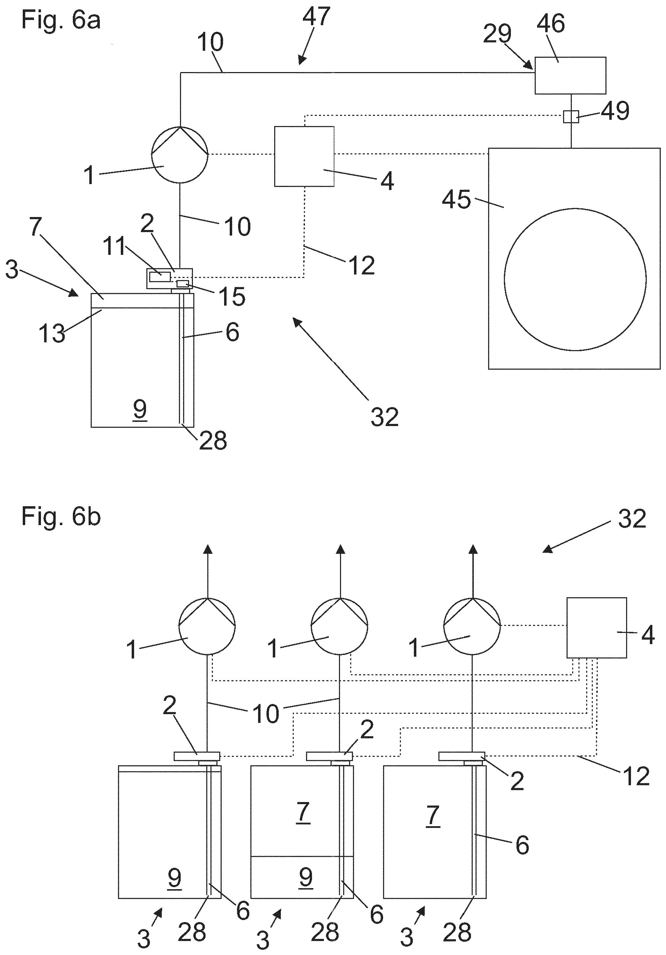

Die Fig. 6a zeigt eine Dosiervorrichtung 32 zum Dosieren einer Flüssigkeit 9, welche sich in einem Behälter 3 befindet. Die Flüssigkeit 9 kann durch eine Andockeinheit 2, welche an einer Öffnung des Behälters 3 lösbar befestigt ist, mittels eines Fördergeräts 1, insbesondere einer Pumpe, angesaugt werden. Die Flüssigkeit 9 kann vom Fördergerät 1 weiter in die Richtung eines Zielgeräts 45, insbesondere einer Waschmaschine oder eines Geschirrspülers, gefördert werden. Es kann dabei vorgesehen sein, dass die Flüssigkeit 9 mittels des Fördergeräts nicht direkt bis zum Zielgerät 45 gefördert wird. Dagegen kann vor dem Zielgerät 45 ein Einspülverteiler 46 vorgesehen sein, in welchem verschiedene Flüssigkeiten 9 vermischt und mittels eines Spülmediums weiter an ein Zielgerät 45 gefördert werden.

Sowohl das Fördergerät 1 als auch die Andockeinheit 2 sind über eine Datenleitung 12 mit einer Steuereinheit 4, insbesondere einer Zentralsteuereinheit, verbunden. Die Steuereinheit 4 kann die gesamte Dosiervorrichtung 32 steuern und dient als zentrale Recheneinheit für die Dosiervorrichtung 32. Dazu steht die Steuereinheit 4 über Datenleitungen 12 in Datenverbindung mit dem Fördergerät 1 und der Andockeinheit 2.

Zwischen Einspülverteiler 46 und Zielgerät 45 kann sich ein steuerbares Ventil 49 befinden. Das Ventil 49 kann auch als Verteilerventil ausgebildet sein und eine Auswahl von mehreren Zielgeräten 45 ermöglichen.

In der Andockeinheit ist der Detektor 15 zur Unterscheidung von Flüssigkeit 9 und Luft 7 angeordnet. In der Andockeinheit 2 ist zudem eine Logikeinheit 11 angeordnet, welche unter anderem Daten des Detektors 15 weiterleitet.

Die Fig. 6b zeigt eine Dosiervorrichtung 32 mit mehreren Behältern 3, welche unterschiedliche Flüssigkeiten 9 enthalten können. Auf jedem Behälter 3 ist eine eigene Andockeinheit 2 mit Detektor 15 angeordnet, wobei jede Andockeinheit 2 über eine Ableitung 10 in kommunikativer Verbindung mit einem Fördergerät 1 steht.

Alle Andockeinheiten 2 und alle Fördergeräte 1 sind mit einer Steuereinheit 4 über Datenleitungen 12 verbunden.

Zu den Figuren 6a und 6b sei angemerkt, dass die Datenleitungen 12 auch kabellos über Funk ausgebildet sein können.

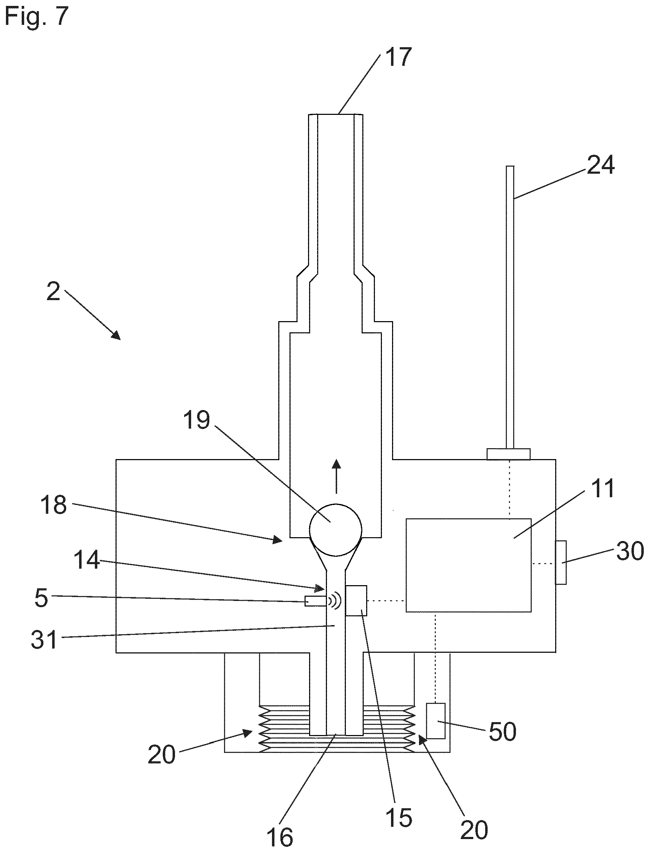

Die Fig. 7 zeigt ein Ausführungsbeispiel einer Andockeinheit 2 in einer schematischen Schnittdarstellung.

An der Oberseite der Andockeinheit 2 ist ein Andockeinheitsauslass 17 vorgesehen, welcher zum Anschluss eines Schlauchs als Ableitung 10 geeignet ist.

Aus der Schnittdarstellung ist auch der Andockeinheitseinlass 16 ersichtlich, über welchen Flüssigkeit 9 in die Andockeinheit 2 gelangen kann. Der Andockeinheitseinlass 16 ist an einem Fortsatz an der Unterseite der Andockeinheit 2 ausgebildet, sodass der Andockeinheitseinlass 16 in einen Einsatz 22 und/oder einen Behälter 3 eingeführt werden kann.

An den Andockeinheitseinlass 16 schließt ein Flüssigkeitskanal 31 an, welcher den Andockeinheitseinlass 16 mit dem Andockeinheitsauslass 17 verbindet. Im Flüssigkeitskanal 31 ist ein Rückschlagventil 18 angeordnet. Das Rückschlagventil 18 weist eine dichtende Kugel 19 auf. Die Kugel 19 kann mittels einer Feder (nicht dargestellt) oder durch die Schwerkraft dichtend an einen sich verjüngenden Teil des Flüssigkeitskanals 31 anliegen. Wird mittels des Fördergeräts 1, insbesondere einer Pumpe, ein Unterdruck angelegt, hebt sich die Kugel 19 und Flüssigkeit kann durch den Flüssigkeitskanal 31 fließen. Alternativ kann das Rückschlagventil 18 mechanisch beim Andocken aufgedrückt werden.

Der Detektor 15 kann zwischen Flüssigkeit 9 und Luft 7 im Detektionsbereich 14, hier im Flüssigkeitskanal 31, unterscheiden.

So kann ein Leerstand im Behälter 3 detektiert werden. Insbesondere kann der Detektor 15 einen Wechsel von Flüssigkeit 9 auf Luft 7 detektieren. Die Luft 7 gelangt in den Detektionsbereich 14, wenn der Behälter 3 fast leer ist.

Detektor 15 kann zudem detektieren, wenn ein Leervolumen "endet", wenn ein Wechsel von Luft 7 auf Flüssigkeit 9 im Detektionsbereich 14 stattfindet.

In dieser Ausführungsform der Andockeinheit 2 ist der Detektor 15 als optischer Sensor ausgebildet. Insbesondere wird ein transluzenter Abschnitt des Flüssigkeitskanals 31 von einer Seite mittels einer Lichtquelle 5 von Licht durchschienen. Auf der gegenüberliegenden Seite des Flüssigkeitskanals 31 ist der Detektor 15 angebracht, welcher das Licht detektieren kann. Durch die Luft 7 in der Flüssigkeit 9 ändert das Brechungsverhalten des Lichts, sodass das Vorhandensein von Luft 7 oder Flüssigkeit 9 detektiert werden kann.

In der Andockeinheit 2 ist zudem eine die Logikeinheit 11 schematisch eingezeichnet. Diese steht in Datenverbindung mit dem Detektor 15.

Die Logikeinheit 11 kann weiterhin in Datenverbindung mit einem Lesegerät 50 zum kontaktlosen Lesen von Daten aus einem im Behälter 3 oder im Einsatz 22 befindlichen Datenträger 48, insbesondere RFID-Tag, stehen.

Das Lesegerät 50 kann zudem als Schreibgerät ausgebildet sein, womit Daten, insbesondere ein geupdatetes Volumen oder ein Füllstand des Behälters, auf den Datenträger 48 schreibbar ist.

Die Daten können an eine Antenne 24 zum drahtlosen Übertragen von Daten und/oder einen Datenanschluss 30 zum Anschluss eines Kabels zum kabelgebundenen Übertragen von Daten weitergeleitet werden. Über die genannten Schnittstellen kann die Andockeinheit mit anderen Einheiten kommunizieren. Insbesondere kann die Andockeinheit 2 so mit einer Steuereinheit 4 verbunden werden.

Zum lösbaren Befestigen der Andockeinheit 2 an einem Behälter 3 und/oder einem Einsatz 22 ist ein Gegengewinde 20 an der Unterseite der Andockeinheit vorgesehen. Beispielsweise kann das Gegengewinde 20 zum Eingriff in ein Behälterverschlussgewinde 21 ausgebildet sein.

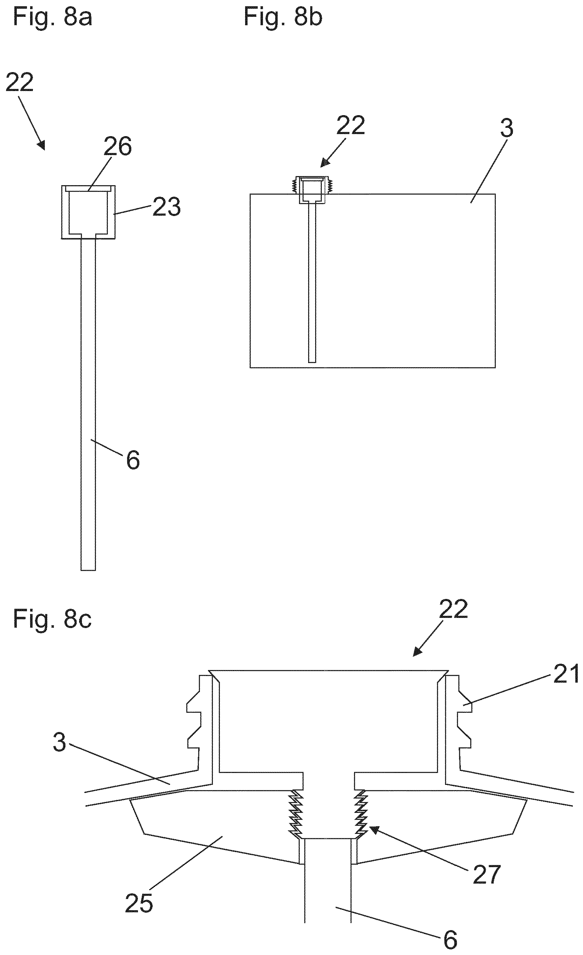

Die Fig. 8a zeigt einen Einsatz 22 in einer schematischen Schnittdarstellung. Die Fig. 8b zeigt einem in einen Behälter 3 lösbar befestigten Einsatz 22.

Der Einsatz 22 weist ein Saugrohr 6 und einen Befestigungsteil 23 auf. Mit dem Befestigungsteil 23 kann der Einsatz 22 in einer Behälteröffnung, vorzugsweise durch Einpressen, lösbar befestigt werden. Dadurch, dass der Einsatz 22 lösbar im Behälter 3 befestigt ist, kann der Behälter 3 nach der Verwendung vom Einsatz 22 getrennt recycelt oder wiederverwendet werden.

Am Befestigungsteil 23 ist zudem eine Dichtung 26 angeordnet, welche den Einsatz 22 gegenüber einer eingesetzten Andockeinheit 2 abdichten kann.

Mittels des Saugrohrs 6, welches bevorzugt aus einem weicheren Material als das Befestigungsteil 23 gefertigt ist, kann Flüssigkeit 9 aus dem Behälter 3 gesaugt werden.

Das Ende des Saugrohrs 6 bildet typischerweise den Einlass 28 in den Förderweg 47 der Dosiervorrichtung 32.

In der Fig. 8b ist ersichtlich, dass der Einsatz 22 in die Behälteröffnung eingebracht wird und dort vorzugsweise eingepresst wird.

Am Einsatz 22 kann ein Datenträger 48, insbesondere ein RFID-Tag, angeordnet sein, welcher mittels eines an der Andockeinheit 2 angeordneten Lesegeräts 50 ausgelesen werden kann. Das Lesegerät 50 kann als Schreibgerät zum Schreiben von Daten auf den Datenträger 48 ausgebildet sein. Der Datenträger 48 kann auch direkt am Behälter 3 angeordnet sein.

Die Fig. 8c zeigt ein alternatives Ausführungsbeispiel eines Einsatzes 22. In diesem Ausführungsbeispiel ist der Einsatz 22 mit einem Rasthaken 25 verbindbar. Der Rasthaken 25 ist ein zusätzliches Bauteil, welches an der Innenseite des Behälters 3 anlegbar ist. Insbesondere kann der Rasthaken 25 so ausgebildet sein, dass er längs durch die Behälteröffnung in den Behälter 3 einbringbar ist und quer die Behälteröffnung überbrücken kann. So kann sich der Rasthaken 25 gegen die Innenseite des Behälters 3 stemmen und den Einsatz 22 in der Öffnung des Behälters 3 halten.

Die Verbindung zwischen dem Einsatz 22 und dem Rasthaken 25 erfolgt vorzugsweise mittels Verrasten mit einer Rastvorrichtung 27, es sind aber auch andere Verbindungen möglich. Eine Rastvorrichtung 27 kann mehrere Rastzähne aufweisen.

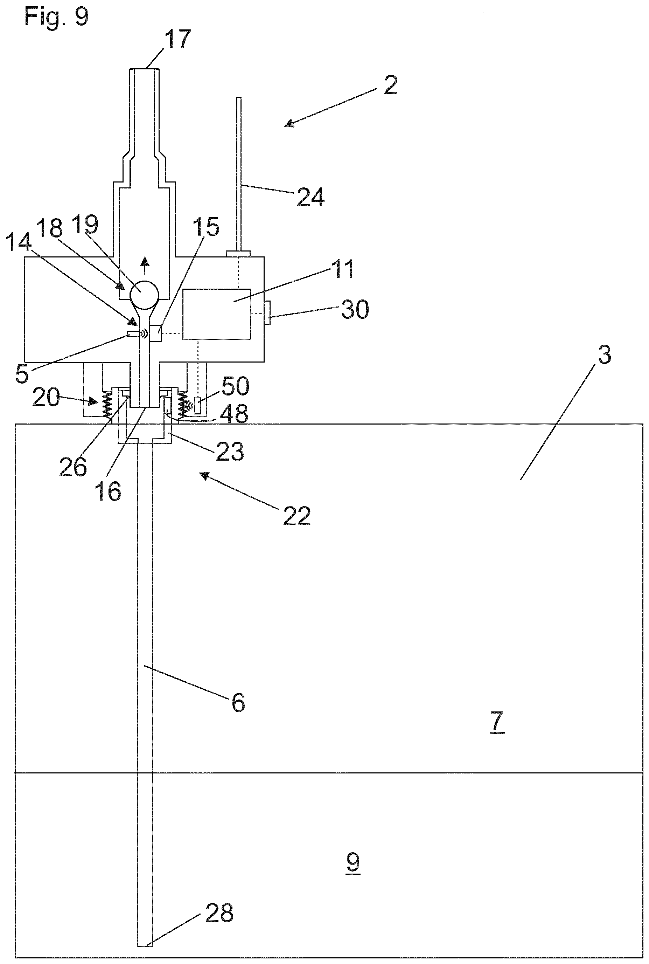

Die Fig. 9 zeigt einen Behälter 3 mit einem Einsatz 22, welcher in der Behälteröffnung befestigt ist, und einer Andockeinheit 2, welche im Einsatz 22 und am Behälter 3 lösbar befestigt ist.

Die Andockeinheit 2 kann mittels eines an der Andockeinheit 2 angeordneten Gegengewindes 20 am Behälterverschlussgewinde 21 des Behälters 3 durch Drehung oder durch Verhaken lösbar befestig werden.

Der Andockeinheitseinlass 16 wird dadurch in kommunikative Verbindung mit dem Inneren des Einsatzes 22 und dem Saugrohr 6 gebracht, sodass Flüssigkeit 9 aus dem Behälter 3 in die Andockeinheit 2 gesaugt werden kann. Eine Dichtung 26, welche als Dichtlippe ausgeformt sein kann, dichtet die Andockeinheit 2 gegenüber dem Einsatz 22 ab, insbesondere wird der Fortsatz der Andockeinheit 2, an welchem der Andockeinheitseinlass 16 angeordnet ist, gegenüber dem Einsatz 22 abgedichtet.

Im befestigten Zustand der Andockeinheit 2 am Behälter 3 kann mittels des Lesegeräts 50 der Andockeinheit 2 der Datenträger 48 am Behälter 3 ausgelesen und/oder beschrieben werden.

### Bezugszeichenliste

- 1: Fördergerät
- 2: Andockeinheit
- 3: Behälter
- 4: Steuereinheit
- 5: Leuchtmittel
- 6: Saugrohr
- 7: Luft
- 9: Flüssigkeit
- 10: Flüssigkeitsleitung
- 11: Logikeinheit
- 12: Datenleitung
- 13: Initialvolumen
- 14: Detektionsbereich
- 15: Detektor
- 16: Andockeinheitseinlass
- 17: Andockeinheitsauslass
- 18: Rückschlagventil
- 19: Kugel
- 20: Gegengewinde
- 21: Behälterverschlussgewinde
- 22: Einsatz
- 23: Befestigungsteil
- 24: Antenne
- 25: Rasthaken
- 26: Dichtung
- 27: Rastvorrichtung
- 28: Einlass
- 29: Auslass
- 30: Datenanschluss
- 31: Flüssigkeitskanal
- 32: Dosiervorrichtung
- 33: Startzählpunkt
- 34: Flüssigkeitsdetektionszählpunkt
- 35: reguläre Dosierzählspanne
- 36: korrigierte Dosierzählspanne
- 37: Leerförderzählspanne
- 38: Gesamtförderzählspanne
- 39: Luftdetektionszählpunkt
- 40: Zählparameter
- 41: Zählpunkt des Stopps der Förderung
- 42: Kalibrierzählspanne
- 43: gewählte Kalibrierzählspanne
- 44: korrigierte Kalibrierzählspanne
- 45: Zielgerät
- 46: Einspülverteiler
- 47: Förderweg
- 48: Datenträger
- 49: Ventil
- 50: Lesegerät

## Patentansprüche

1. Verfahren zum Kalibrieren mindestens eines Fördergeräts (1) zum Fördern von Flüssigkeit (9) und/oder Luft (7) einer Dosiervorrichtung (32) zum Dosieren einer Flüssigkeit (9) von mindestens einem Einlass (28) zu mindestens einem Auslass (29), insbesondere von mindestens einem Behälter (3) zu mindestens einem Einspülverteiler (46) und/oder mindestens einem Zielgerät (45), mittels des mindestens einen Fördergeräts (1), wobei ein Detektionsbereich (14) mindestens eines Detektors (15) zur Unterscheidung zwischen Flüssigkeit (9) und Luft (7) zwischen dem mindestens einen Einlass (28) und dem mindestens einen Auslass (29) angeordnet ist, mit den folgenden Verfahrensschritten:
- Anschließen von mindestens einem, insbesondere austauschbaren, Behälter (3) an den mindestens einen Einlass (28) mittels mindestens einer Andockeinheit (2) zum Ankoppeln an den mindestens einen Behälter (3) und/oder mittels einer Sauglanze zum Einbringen in den mindestens einen Behälter (2), wobei der Detektionsbereich (14) des mindestens einen Detektors (15) in der Andockeinheit (2) und/oder in oder an der Sauglanze angeordnet ist,
- Start des Förderns von Flüssigkeit (9) und/oder Luft (7) durch Ansprechen des mindestens einen Fördergeräts (1) zu einem Startzählpunkt (33),
- Detektion eines Wechsels von Flüssigkeit (9) auf Luft (7) im Detektionsbereich (14) durch den mindestens einen Detektor (15) zu einem Luftdetektionszählpunkt (39),
- Verwendung des Intervalls zwischen dem Startzählpunkt (33) und dem Luftdetektionszählpunkt (39) als Kalibrierzählspanne (42) zum Kalibrieren des mindestens einen Fördergeräts (1),
und/oder mit den folgenden Verfahrensschritten:
- Anschließen von mindestens einem, insbesondere austauschbaren, Behälter (3) an den mindestens einen Einlass (28),
- Start des Förderns von Flüssigkeit (9) und/oder Luft (7) durch Ansprechen des mindestens einen Fördergeräts (1) zu einem Startzählpunkt (33),
- Detektion eines Wechsels von Luft (7) auf Flüssigkeit (9) im Detektionsbereich (14) durch den mindestens einen Detektor (15) zu einem Flüssigkeitsdetektionszählpunkt (34),
- Detektion eines Wechsels von Flüssigkeit (9) auf Luft (7) im Detektionsbereich (14) durch den mindestens einen Detektor (15) zu einem Luftdetektionszählpunkt (39),
- Verwendung des Intervalls zwischen dem Flüssigkeitsdetektionszählpunkt (34) und dem Luftdetektionszählpunkt (39) als Kalibrierzählspanne (42) .

2. Verfahren nach dem vorhergehenden Anspruch, wobei
- zwischen dem Startzählpunkt (34) und dem Luftdetektionszählpunkt (39) ein bekanntes oder messbares Referenzvolumen und ein Leervolumen gefördert wird, vorzugsweise wobei das Leervolumen weniger als 5 Prozent, bevorzugt weniger als 2 Prozent und besonders bevorzugt weniger als 1 Prozent des Referenzvolumens groß ist, und/oder
- zwischen dem Flüssigkeitsdetektionszählpunkt (34) und dem Luftdetektionszählpunkt (39) ein bekanntes oder messbares Referenzvolumen gefördert wird.

3. Verfahren zum Dosieren einer Flüssigkeit (9) von mindestens einem Einlass (28) zu mindestens einem Auslass (29), insbesondere von mindestens einem Behälter (3) zu mindestens einem Einspülverteiler (46) und/oder mindestens einem Zielgerät(45), mittels mindestens eines Fördergeräts (1) zum Fördern von Flüssigkeit (9) und/oder Luft (7), insbesondere in Kombination mit einem Verfahren nach einem der vorhergehenden Ansprüche, wobei ein Detektionsbereich (14) mindestens eines Detektors (15) zur Unterscheidung zwischen Flüssigkeit (9) und Luft (7) zwischen dem mindestens einen Einlass (28) und dem mindestens einen Auslass (29) angeordnet ist, mit den folgenden Verfahrensschritten:
- Anschließen von mindestens einem, insbesondere austauschbaren, Behälter (3) an den mindestens einen Einlass (28),
- Start des Förderns von Flüssigkeit (9) und/oder Luft (7) durch Ansprechen des mindestens einen Fördergeräts (1) zu einem Startzählpunkt (33),
- Detektion eines Wechsels von Luft (7) auf Flüssigkeit (9) im Detektionsbereich (14) durch den mindestens einen Detektor (15) zu einem Flüssigkeitsdetektionszählpunkt (34),
- Stopp des Förderns von Flüssigkeit (9) und/oder Luft (7) durch Ansprechen des mindestens einen Fördergeräts (1), wobei der Flüssigkeitsdetektionszählpunkts (34) zur Bestimmung des Zählpunkts des Stopps berücksichtigt wird.

4. Verfahren nach einem der vorhergehenden Ansprüche, wobei der mindestens eine Detektionsbereich (14) des mindestens einen Detektors (15) in oder an einer Sauglanze oder an einer Flüssigkeitsleitung (10) des Förderwegs (47) angeordnet ist.

5. Verfahren nach einem der vorhergehenden Ansprüche, wobei das mindestens eine Fördergerät (1)
- als steuerbare Pumpe, insbesondere Schlauchquetschpumpe oder Membranpumpe oder Kolbenpumpe oder Zahnradpumpe oder Exzenterschneckenpumpe, und/oder
- als steuerbares Ventil
ausgebildet ist.

6. Verfahren nach einem der vorhergehenden Ansprüche, wobei der mindestens eine Detektor (15)
- als optischer Sensor ausgebildet ist, und/oder
- als Sensor für elektromagnetische Wellen, und/oder
- als Ultraschallsensor, und/oder
- als Schwimmer mit Schalter
ausgebildet ist.

7. Verfahren nach einem der vorhergehenden Ansprüche, wobei das mindestens eine Fördergerät (1) von mindestens einer Steuereinheit (4) gesteuert wird, vorzugsweise wobei die mindestens eine Steuereinheit (4) als Zentralsteuereinheit, welche mindestens ein Fördergerät (1) und/oder mindestens ein Zielgerät (45) und/oder mindestens ein Ventil (49) steuert, ausgebildet ist.

8. Verfahren nach dem vorhergehenden Anspruch, wobei der mindestens eine Detektor (15) ein Signal an die Steuereinheit (4) sendet, wenn ein Wechsel von Flüssigkeit (9) auf Luft (7), oder umgekehrt, detektiert wird.

9. Verfahren nach einem der vorhergehenden Ansprüche, wobei die Detektion eines Wechsels von Flüssigkeit (9) auf Luft (7) oder von Luft (7) auf Flüssigkeit (9) erfolgt, wenn ein Mittelwert eines Detektorsignals, insbesondere einer Lichtintensität bei einem optischen Detektor, über einen bestimmten Detektionszeitraum einen bestimmten Schwellwert über- oder unterschreitet.

10. Verfahren nach einem der vorhergehenden Ansprüche, wobei die Detektion eines Wechsels von Flüssigkeit (9) auf Luft (7) erst berücksichtigt wird, wenn
- eine bestimmte Anlaufzeit, insbesondere gezählt ab dem Startzählpunkt (33), abgelaufen ist, und/oder
- das Restvolumen an Flüssigkeit (9) im mindestens einen Behälter (3) ein bestimmtes Grenzvolumen, beispielsweise 20 Prozent, insbesondere 10 Prozent, des Initialvolumens (13), unterschreitet.

11. Verfahren nach einem der vorhergehenden Ansprüche, wobei das Restvolumen an Flüssigkeit (9) im mindestens einen Behälter (3) in der mindestens einen Dosiervorrichtung (32), insbesondere in der Steuereinheit (4), und/oder in einem Datenträger (48) des mindestens einen Behälters (3) gespeichert und nach einem Fördern aktualisiert wird, und/oder wobei das Restvolumen an Flüssigkeit (9) im mindestens einen Behälter (3) mittels eines Sensors gemessen wird.

12. Dosiervorrichtung (32) zum Dosieren einer Flüssigkeit (9) von mindestens einem Einlass (28) zu mindestens einem Auslass (29), insbesondere von mindestens einem Behälter (3) zu mindestens einem Einspülverteiler (46) und/oder mindestens einem Zielgerät(45), aufweisend Mittel, das Verfahren nach einem der vorhergehenden Ansprüche auszuführen, umfassend mindestens ein Fördergerät (1) zum Fördern von Flüssigkeit (9) und/oder Luft (7), der mindestens eine Einlass (28), der mindestens eine Auslass (29) und mindestens ein Detektor (15), wobei ein Detektionsbereich (14) mindestens eines Detektors (15) zur Unterscheidung zwischen Flüssigkeit (9) und Luft (7) zwischen dem mindestens einen Einlass (28) und dem mindestens einen Auslass (29) angeordnet ist.

13. Dosiervorrichtung (32) nach dem vorhergehenden Anspruch, wobei der mindestens eine Einlass (28) im mindestens einen Behälter (4) angeordnet ist, vorzugsweise wobei
- der mindestens eine Behälter (4) mittels einer Andockeinheit (2) an die Dosiervorrichtung (32) ankoppelbar ist, und/oder
- im mindestens einen Behälter (3) mindestens ein Einsatz (22) und/oder mindestens ein Datenträger (48), insbesondere ein RFID-Tag, angeordnet ist, besonders bevorzugt wobei der mindestens eine Datenträger (48) am mindestens einen Einsatz (22) angeordnet ist.

14. Dosiervorrichtung (32) nach Anspruch 12 oder 13, wobei die Dosiervorrichtung (32) mindestens ein Lesegerät (50) zum, insbesondere berührungslosen, Lesen eines, vorzugsweise am Behälter (3) oder an einem Einsatz (22) im Behälter (3) angeordneten, Datenträgers (48) aufweist, besonders bevorzugt wobei das mindestens eine Lesegerät (50) zudem als Schreibgerät ausgeformt ist.

15. Dosiervorrichtung (32) nach einem der Ansprüche 12 bis 14, wobei mindestens zwei Behälter (3) und mindestens zwei Fördergeräte (1) vorgesehen sind und jeweils ein Fördergerät (1) pro Behälter (3) vorgesehen ist, vorzugsweise wobei die Flüssigkeit (9) mittels des Fördergeräts (1) in einen Einspülverteiler (46) förderbar ist, besonders bevorzugt wobei die Flüssigkeit (9) vom Einspülverteiler (46) über ein Spülmedium, insbesondere Wasser, weiter zum mindestens einen Zielgerät (49) förderbar ist.

## Claims

1. A method for calibrating at least one conveyor device (1) for conveying liquid (9) and/or air (7) of a dosing device (32) for dosing a liquid (9) from at least one inlet (28) to at least one outlet (29), in particular from at least one container (3) to at least one rinsing-in distributor (46) and/or at least one target device (45), by means of the at least one conveyor device (1), wherein a detection region (14) of at least one detector (15) for distinguishing between liquid (9) and air (7) is arranged between the at least one inlet (28) and the at least one outlet (29), with the following steps:
- connecting at least one, in particular interchangeable, container (3) to the at least one inlet (28) by means of at least one docking unit (2) for coupling to the at least one container (3) and/or by means of a suction lance for inserting into the at least one container (2), wherein the detection region (14) of the at least one detector (15) is arranged in the docking unit (2) and/or in or on the suction lance,
- starting the conveying of liquid (9) and/or air (7) by activating the at least one conveyor device (1) at a start counting point (33),
- detecting a change from liquid (9) to air (7) in the detection region (14) by the at least one detector (15) at an air detection counting point (39),
- using the interval between the start counting point (33) and the air detection counting point (39) as a calibration counting span (42) to calibrate the at least one conveyor device (1), and/or with the following steps:
- connecting at least one, in particular interchangeable, container (3) to the at least one inlet (28),
- starting the conveying of liquid (9) and/or air (7) by activating the at least one conveyor device (1) at a start counting point (33),
- detecting a change from air (7) to liquid (9) in the detection region (14) by the at least one detector (15) at a liquid detection counting point (34),
- detecting a change from liquid (9) to air (7) in the detection region (14) by the at least one detector (15) at an air detection counting point (39),
- using the interval between the liquid detection counting point (34) and the air detection counting point (39) as the calibration counting span (42).

2. The method according to the preceding claim, wherein
- a known or measurable reference volume and an empty volume are conveyed between the start counting point (34) and the air detection counting point (39), preferably wherein the empty volume is less than 5 percent, preferably less than 2 percent and particularly preferably less than 1 percent of the reference volume, and/or
- a known or measurable reference volume is conveyed between the liquid detection counting point (34) and the air detection counting point (39).

3. A method for dosing a liquid (9) from at least one inlet (28) to at least one outlet (29), in particular from at least one container (3) to at least one rinsing-in distributor (46) and/or at least one target device (45), by means of at least one conveyor device (1) for conveying liquid (9) and/or air (7), in particular in combination with a method according to any one of the preceding claims, wherein a detection region (14) of at least one detector (15) for distinguishing between liquid (9) and air (7) is arranged between the at least one inlet (28) and the at least one outlet (29), with the following steps:
- connecting at least one, in particular interchangeable, container (3) to the at least one inlet (28),
- starting the conveying of liquid (9) and/or air (7) by activating the at least one conveyor device (1) at a start counting point (33),
- detecting a change from air (7) to liquid (9) in the detection region (14) by the at least one detector (15) at a liquid detection counting point (34),
- stopping the conveying of liquid (9) and/or air (7) by activating the at least one conveyor device (1), wherein the liquid detection counting point (34) is taken into account for determining the counting point of the stop.

4. The method according to any one of the preceding claims, wherein the at least one detection region (14) of the at least one detector (15) is arranged in or on a suction lance or on a liquid line (10) of the conveying path (47).

5. The method according to any one of the preceding claims, wherein the at least one conveyor device (1) is designed
- as a controllable pump, in particular a peristaltic pump or diaphragm pump or piston pump or gear pump or progressive cavity pump, and/or
- as a controllable valve.

6. The method according to any one of the preceding claims, wherein the at least one detector (15) is designed
- as an optical sensor, and/or
- as a sensor for electromagnetic waves, and/or
- as an ultrasonic sensor, and/or
- as a floater with a switch.

7. The method according to any one of the preceding claims, wherein the at least one conveyor device (1) is controlled by at least one control unit (4), preferably wherein the at least one control unit (4) is designed as a central control unit which controls at least one conveyor device (1) and/or at least one target device (45) and/or at least one valve (49).

8. The method according to the preceding claim, wherein the at least one detector (15) sends a signal to the control unit (4) when a change from liquid (9) to air (7), or vice versa, is detected.

9. The method according to any one of the preceding claims, wherein the detection of a change from liquid (9) to air (7) or from air (7) to liquid (9) takes place when an average value of a detector signal, in particular a light intensity in an optical detector, exceeds or falls below a certain threshold value over a certain detection period.

10. The method according to any one of the preceding claims, wherein the detection of a change from liquid (9) to air (7) is only taken into account when
- a certain start-up time, in particular counted from the start counting point (33), has elapsed, and/or
- the residual volume of liquid (9) in the at least one container (3) falls below a certain limit volume, for example 20 percent, in particular 10 percent, of the initial volume (13).

11. The method according to any one of the preceding claims, wherein the residual volume of liquid (9) in the at least one container (3) is stored in the at least one dosing device (32), in particular in the control unit (4), and/or in a data carrier (48) of the at least one container (3) and is updated after a conveying, and/or wherein the residual volume of liquid (9) in the at least one container (3) is measured by means of a sensor.

12. A dosing device (32) for dosing a liquid (9) from at least one inlet (28) to at least one outlet (29), in particular from at least one container (3) to at least one rinsing-in distributor (46) and/or at least one target device (45), having means for carrying out the method according to any one of the preceding claims, comprising at least one conveyor device (1) for conveying liquid (9) and/or air (7), the at least one inlet (28), the at least one outlet (29) and at least one detector (15), wherein a detection region (14) of at least one detector (15) for distinguishing between liquid (9) and air (7) is arranged between the at least one inlet (28) and the at least one outlet (29).

13. The dosing device (32) according to the preceding claim, wherein the at least one inlet (28) is arranged in the at least one container (4), preferably wherein
- the at least one container (4) can be coupled to the dosing device (32) by means of a docking unit (2), and/or
- at least one insert (22) and/or at least one data carrier (48), in particular an RFID-tag, is arranged in the at least one container (3), particularly preferably wherein the at least one data carrier (48) is arranged on the at least one insert (22).

14. The dosing device (32) according to claim 12 or 13, wherein the dosing device (32) has at least one reading device (50) for reading, in particular contactlessly, a data carrier (48), which is arranged preferably on the container (3) or on an insert (22) in the container (3), particularly preferably wherein the at least one reading device (50) is also designed as a writing device.

15. The dosing device (32) according to any one of claims 12 to 14, wherein at least two containers (3) and at least two conveyor devices (1) are provided and one respective conveyor device (1) is provided for each container (3), preferably wherein the liquid (9) can be conveyed by means of the conveyor device (1) into a rinsing-in distributor (46), particularly preferably wherein the liquid (9) can be further conveyed from the rinsing-in distributor (46) via a rinsing medium, in particular water, to the at least one target device (49).

## Revendications

1. Procédé de calibrage d'au moins un dispositif de pompage (1) pour le pompage de liquide (9) et/ou d'air (7) d'un dispositif de dosage (32) pour le dosage d'un liquide (9) depuis au moins une entrée (28) vers au moins une sortie (29), notamment depuis au moins un réservoir (3) vers au moins un répartiteur de rinçage (46) et/ou au moins un appareil cible (45), au moyen dudit au moins un dispositif de pompage (1), un domaine de détection (14) d'au moins un détecteur (15) pour la distinction entre liquide (9) et air (7) étant disposé entre ladite au moins une entrée (28) et ladite au moins une sortie (29), comprenant les étapes suivantes consistant à :
- raccorder au moins un réservoir (3), notamment interchangeable, à ladite au moins une entrée (28) au moyen d'au moins une unité d'accouplement (2) pour l'accouplement audit au moins un réservoir (3) et/ou au moyen d'une lance d'aspiration à introduire dans ledit au moins un réservoir (3), le domaine de détection (14) dudit au moins un détecteur (15) étant disposé dans l'unité d'accouplement (2) et/ou dans ou sur la lance d'aspiration,
- démarrer le pompage de liquide (9) et/ou d'air (7) par commande dudit au moins un dispositif de pompage (1) à un point de comptage de départ (33),
- détecter un changement de liquide (9) à air (7) dans le domaine de détection (14) par ledit au moins un détecteur (15) à un point de comptage de détection d'air (39),
- utiliser l'intervalle entre le point de comptage de départ (33) et le point de comptage de détection d'air (39) comme plage de comptage de calibrage (42) pour calibrer ledit au moins un dispositif de pompage (1),
et/ou comprenant les étapes suivantes consistant à :
- raccorder au moins un réservoir (3), notamment interchangeable, à ladite au moins une entrée (28),
- démarrer le pompage de liquide (9) et/ou d'air (7) par commande dudit au moins un dispositif de pompage (1) à un point de comptage de départ (33),
- détecter un changement d'air (7) à liquide (9) dans le domaine de détection (14) par ledit au moins un détecteur (15) à un point de comptage de détection de liquide (34),
- détecter un changement de liquide (9) à air (7) dans le domaine de détection (14) par ledit au moins un détecteur (15) à un point de comptage de détection d'air (39),
- utiliser l'intervalle entre le point de comptage de détection de liquide (34) et le point de comptage de détection d'air (39) comme plage de comptage de calibrage (42).

2. Procédé selon la revendication précédente, dans lequel
- entre le point de comptage de départ (33) et le point de comptage de détection d'air (39), un volume de référence connu ou mesurable et un volume à vide sont pompés, de préférence le volume à vide étant inférieur à 5 %, de préférence inférieur à 2 % et particulièrement de préférence inférieur à 1 % du volume de référence, et/ou
- entre le point de comptage de détection de liquide (34) et le point de comptage de détection d'air (39), un volume de référence connu ou mesurable est pompé.

3. Procédé de dosage d'un liquide (9) depuis au moins une entrée (28) vers au moins une sortie (29), notamment depuis au moins un réservoir (3) vers au moins un répartiteur de rinçage (46) et/ou au moins un appareil cible (45), au moyen d'au moins un dispositif de pompage (1) pour le pompage de liquide (9) et/ou d'air (7), notamment en combinaison avec un procédé selon l'une des revendications précédentes, un domaine de détection (14) d'au moins un détecteur (15) pour la distinction entre liquide (9) et air (7) étant disposé entre ladite au moins une entrée (28) et ladite au moins une sortie (29), comprenant les étapes suivantes consistant à :
- raccorder au moins un réservoir (3), notamment interchangeable, à ladite au moins une entrée (28),
- démarrer le pompage de liquide (9) et/ou d'air (7) par commande dudit au moins un dispositif de pompage (1) à un point de comptage de départ (33),
- détecter un changement d'air (7) à liquide (9) dans le domaine de détection (14) par ledit au moins un détecteur (15) à un point de comptage de détection de liquide (34),
- arrêter le pompage de liquide (9) et/ou d'air (7) par commande dudit au moins un dispositif de pompage (1), le point de comptage de détection de liquide (34) étant pris en compte pour la détermination du point de comptage de l'arrêt.

4. Procédé selon l'une des revendications précédentes, dans lequel ledit au moins un domaine de détection (14) dudit au moins un détecteur (15) est disposé dans ou sur une lance d'aspiration ou sur une conduite de liquide (10) du trajet de pompage (47).

5. Procédé selon l'une des revendications précédentes, dans lequel ledit au moins un dispositif de pompage (1) est configuré
- comme pompe commandable, notamment pompe péristaltique, ou une pompe à membrane, ou une pompe à piston, ou une pompe à engrenages ou une pompe à vis excentrée, et/ou
- comme vanne commandable.

6. Procédé selon l'une des revendications précédentes, dans lequel ledit au moins un détecteur (15) est configuré sous la forme
- d'un capteur optique, et/ou
- d'un capteur d'ondes électromagnétiques, et/ou
- d'un capteur à ultrasons, et/ou
- d'un flotteur avec interrupteur.

7. Procédé selon l'une des revendications précédentes, dans lequel ledit au moins un dispositif de pompage (1) est commandé par au moins une unité de commande (4), de préférence ladite au moins une unité de commande (4) étant configurée sous la forme d'une unité de commande centrale commandant au moins un dispositif de pompage (1) et/ou au moins un appareil cible (45) et/ou au moins une vanne (49).

8. Procédé selon la revendication précédente, dans lequel ledit au moins un détecteur (15) envoie un signal à l'unité de commande (4) lorsqu'un changement de liquide (9) à air (7), ou inversement, est détecté.

9. Procédé selon l'une des revendications précédentes, dans lequel la détection d'un changement de liquide (9) à air (7) ou d'air (7) à liquide (9) a lieu lorsqu'une valeur moyenne d'un signal de détecteur, notamment une intensité lumineuse dans le cas d'un détecteur optique, dépasse ou descend en dessous d'un certain seuil pendant une période de détection déterminée.

10. Procédé selon l'une des revendications précédentes, dans lequel la détection d'un changement de liquide (9) à air (7) n'est prise en compte que lorsque
- un certain temps de démarrage, notamment compté à partir du point de comptage de départ (33), s'est écoulé, et/ou
- le volume résiduel de liquide (9) dans ledit au moins un réservoir (3) est inférieur à un volume limite déterminé, par exemple 20 %, notamment 10 %, du volume initial (13).

11. Procédé selon l'une des revendications précédentes, dans lequel le volume résiduel de liquide (9) dans ledit au moins un réservoir (3) est mémorisé dans ledit au moins un dispositif de dosage (32), notamment dans l'unité de commande (4), et/ou dans un support de données (48) dudit au moins un réservoir (3), et est actualisé après un pompage, et/ou le volume résiduel de liquide (9) dans ledit au moins un réservoir (3) est mesuré au moyen d'un capteur.

12. Dispositif de dosage (32) pour le dosage d'un liquide (9) depuis au moins une entrée (28) vers au moins une sortie (29), notamment depuis au moins un réservoir (3) vers au moins un répartiteur de rinçage (46) et/ou au moins un appareil cible (45), présentant des moyens pour exécuter le procédé selon l'une des revendications précédentes, comprenant au moins un dispositif de pompage (1) pour le pompage de liquide (9) et/ou d'air (7), ladite au moins une entrée (28), ladite au moins une sortie (29) et au moins un détecteur (15), un domaine de détection (14) dudit au moins un détecteur (15) pour la distinction entre liquide (9) et air (7) étant disposé entre ladite au moins une entrée (28) et ladite au moins une sortie (29).

13. Dispositif de dosage (32) selon la revendication précédente, dans lequel ladite au moins une entrée (28) est disposée dans ledit au moins un réservoir (3), de préférence
- ledit au moins un réservoir (3) pouvant être accouplé au dispositif de dosage (32) au moyen d'une unité d'accouplement (2), et/ou
- dans au moins un réservoir (3) sont disposés au moins un insert (22) et/ou au moins un support de données (48), notamment une étiquette RFID, particulièrement de préférence ledit au moins un support de données (48) étant disposé sur ledit au moins un insert (22).

14. Dispositif de dosage (32) selon la revendication 12 ou 13, dans lequel le dispositif de dosage (32) comprend au moins un dispositif de lecture (50) pour la lecture, notamment sans contact, d'un support de données (48) disposé de préférence sur le réservoir (3) ou sur un insert (22) dans le réservoir (3), particulièrement de préférence ledit au moins un dispositif de lecture (50) étant en outre configuré sous la forme d'un dispositif d'écriture.

15. Dispositif de dosage (32) selon l'une des revendications 12 à 14, dans lequel au moins deux réservoirs (3) et au moins deux dispositifs de pompage (1) sont prévus, un dispositif de pompage (1) étant prévu par réservoir (3), de préférence le liquide (9) pouvant être pompé au moyen du dispositif de pompage (1) vers un répartiteur de rinçage (46), particulièrement de préférence le liquide (9) pouvant être pompé depuis le répartiteur de rinçage (46) vers ledit au moins un appareil cible (49) au moyen d'un fluide de rinçage, notamment de l'eau.
